(19) Europäisches Patentamt / European Patent Office / Office européen des brevets

(11) **EP 4 600 080 A1**

(12) **DEMANDE DE BREVET EUROPEEN**

(43) Date de publication:
**13.08.2025 Bulletin 2025/33**

(21) Numéro de dépôt: **25156502.4**

(22) Date de dépôt: **07.02.2025**

(51) Classification Internationale des Brevets (IPC):
**B60L 53/63** (2019.01) **B60L 53/67** (2019.01)
**G06Q 10/04** (2023.01) **G06Q 50/06** (2024.01)
**H02J 3/00** (2006.01)

(52) Classification Coopérative des Brevets (CPC):
**B60L 53/63; B60L 53/67; G06Q 10/04; G06Q 50/06; H02J 3/003;** B60L 2240/70; B60L 2240/80; B60L 2260/58

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **09.02.2024 FR 2401270**

(71) Demandeur: **SCHNEIDER ELECTRIC INDUSTRIES SAS**
**92500 Rueil-Malmaison (FR)**

(72) Inventeurs:
• **PUECH, Alban**
**92500 RUEIL MALMAISON (FR)**
• **RIGAUT, Tristan**
**92500 RUEIL MALMAISON (FR)**

(74) Mandataire: **Lavoix**
**62, rue de Bonnel**
**69448 Lyon Cedex 03 (FR)**

(54) **PROCÉDÉ DE DÉTERMINATION D'UN SCÉNARIO PRÉVISIONNEL DE FONCTIONNEMENT D'UN SYSTÈME DE STATIONS DE RECHARGE POUR VÉHICULES ÉLECTRIQUES, PROCÉDÉ DE COMMANDE ET SYSTÈME DE STATIONS DE RECHARGE ASSOCIÉS**

(57) La présente invention concerne un procédé de détermination d'un scénario prévisionnel de fonctionnement d'un système de stations de recharge (I) pour véhicules électriques comprenant un système d'alimentation (P) et une pluralité de stations de recharge (S1 - Sn) alimentées par le système d'alimentation et pouvant recharger des véhicules électriques (V1 - Vn). Le procédé comprend, pour chaque station de recharge et pour chaque pas de temps d'un intervalle de temps, maintenir la station de recharge dans un état actif ou inactif, ou changer l'état de la station de recharge, avec une probabilité de changement d'état calculée sur la base de :
- l'heure et la date correspondant au pas de temps ;
- une durée depuis le dernier changement d'état de la station de recharge ; et
- si la station de recharge est en état actif, une durée restante avant un temps de fin de recharge annoncé du véhicule électrique.

FIG. 1

**Description**

La présente invention concerne un procédé de détermination d'un scénario prévisionnel de fonctionnement d'un système de stations de recharge pour véhicules électriques, un procédé de commande d'un système de stations de recharge pour véhicules électriques mettant en oeuvre un tel procédé de détermination d'un scénario prévisionnel de fonctionnement et un système de stations de recharge pour véhicules électriques commandé par un tel procédé de commande.

Un système de stations de recharge comprend un système d'alimentation en énergie électrique ainsi que plusieurs stations de recharge étant chacune alimentée par le système d'alimentation et permettant chacune de délivrer une énergie électrique à un véhicule électrique.

Généralement, lorsqu'un véhicule électrique est branché à une station de recharge, une requête est émise par le véhicule ou par l'utilisateur du véhicule à destination de la station de recharge. Cette requête comprend la quantité d'énergie électrique demandée par le véhicule pour sa recharge ainsi qu'un temps de fin de charge annoncé, correspondant à une date et une heure à laquelle l'utilisateur du véhicule souhaite débrancher le véhicule de la station de recharge. La quantité d'énergie électrique associée à la requête est généralement exprimée en kWh, mais peut également être exprimée en distance, notamment en kilomètre, cette distance étant ensuite convertie en kWh en fonction des performances du véhicule électrique

Une problématique courante, dans la gestion d'un tel système de stations de recharge, est de limiter la puissance électrique totale délivrée par le système d'alimentation aux stations de recharge, pour ne pas dépasser un seuil de puissance maximale. Ce seuil correspond, par exemple, à une limitation physique de la puissance que le système d'alimentation est apte à délivrer, ou bien à un seuil imposé par le fournisseur d'électricité du système de stations de recharge I, ou bien à un seuil au-dessus duquel le prix de l'électricité augmente. Le respect de ce seuil de puissance maximale est toutefois délicat, dans la mesure où le nombre de véhicules électriques connectés au système de stations de recharge à un instant donné et la quantité d'énergie électrique demandée par chaque véhicule ne sont pas connus d'avance.

Pour respecter ce seuil de puissance maximale, il est ainsi connu de limiter la puissance électrique délivrée par certaines des stations de recharge aux véhicules électriques associés sur certaines périodes de temps, de manière réactive, dès que la puissance délivrée par le système d'alimentation se rapproche du seuil de puissance maximale. Cette approche engendre le risque de ne pas réussir à recharger ces véhicules de la quantité d'énergie électrique demandée avant le temps de fin de charge annoncé, créant de l'insatisfaction chez les utilisateurs de ces véhicules.

Il est également connu d'établir un scénario prévisionnel de fonctionnement du système de stations de recharge, de sorte à anticiper les périodes où la puissance délivrée par le système d'alimentation risque de se rapprocher du seuil de puissance maximale et lisser dans le temps la recharge des véhicules électriques, par exemple en retardant la recharge de certains véhicules. Un tel scénario est généralement basé uniquement sur l'historique de fonctionnement du système de stations de recharge. Une telle approche présente l'inconvénient de manquer de fiabilité, le scénario prévisionnel de fonctionnement s'avérant souvent inexact, ce qui conduit à des dépassements du seuil de puissance maximale, par exemple si un nombre plus important que prévu de véhicules électriques se connecte simultanément au système de stations de recharge, et à de l'insatisfaction chez les utilisateurs des véhicules. En particulier, le fait de retarder la recharge de certains véhicules peut aboutir au non-respect de la quantité d'énergie électrique demandée par le véhicule pour sa recharge, c'est-à-dire à une fourniture de quantité d'énergie plus faible que ce qui a été requis par l'utilisateur, ce qui se produit notamment lorsque l'utilisateur du véhicule déconnecte le véhicule de la station de recharge avant le temps de fin de charge annoncé.

Un but de l'invention est alors de proposer un procédé de détermination d'un scénario prévisionnel de fonctionnement d'un système de stations de recharge pour véhicules électriques permettant d'obtenir un scénario prévisionnel ayant plus de chances d'être réalisé que les scénarios établis selon les approches connues, c'est-à-dire un scénario prévisionnel plus réaliste que les scénarios établis selon les approches connues.

À cet effet, l'invention a pour objet un procédé de détermination d'un scénario prévisionnel de fonctionnement d'un système de stations de recharge pour véhicules électriques au cours d'un intervalle de temps prédéterminé comprenant plusieurs pas de temps, le système de stations de recharge comprenant :

- un système d'alimentation, et
- une pluralité de stations de recharge, chaque station de recharge étant configurée pour être alimentée en énergie électrique par le système d'alimentation et pour délivrer une énergie électrique à un véhicule électrique, chaque station de recharge étant soit en état inactif, lorsqu'elle n'est pas capable de recharger un véhicule électrique, soit en état actif, lorsqu'elle est capable de recharger un véhicule électrique.

Le procédé comprenant, pour chaque station de recharge et pour chaque pas de temps de l'intervalle de temps prédéterminé, maintenir la station de recharge dans son état ou changer l'état de la station de recharge, avec une

EP 4 600 080 A1

probabilité de changer l'état de la station de recharge calculée sur la base de :

- l'heure et la date correspondant au pas de temps actif,
- une durée de session, exprimée en nombre de pas de temps, séparant le pas de temps actif du dernier pas de temps passé au cours duquel la station de recharge a changé d'état, et
- si la station de recharge est en état actif, une durée restante, exprimée en nombre de pas de temps, séparant le pas de temps actif d'un pas de temps futur correspondant à une heure et une date de fin de recharge du véhicule électrique, l'heure et la date de fin de recharge du véhicule électrique étant déterminés pendant un pas de temps passé au cours duquel la station de recharge a basculée en état actif,

le procédé comprenant en outre une étape de détermination d'une représentation numérique d'un scénario prévisionnel de fonctionnement du système de stations de recharge comprenant, pour chaque pas de temps, l'état de chaque station de recharge.

Grâce à l'invention, le scénario prévisionnel déterminé par le procédé intègre le risque de déconnexion anticipée d'un véhicule électrique par son utilisateur avant le temps de fin de charge annoncé, grâce à la prise en compte de la durée restante entre chaque pas de temps et l'heure et la date de fin de recharge annoncés. Ce scénario prévisionnel peut ensuite être utilisé pour commander un système de stations de recharge et cette prise en compte du risque de déconnexion anticipée permet alors d'obtenir un niveau de charge acceptable pour les véhicules électriques rechargés, même lorsqu'ils sont déconnectés de manière anticipée. Le scénario prévisionnel est ainsi plus fiable et plus robuste et la satisfaction des utilisateurs des véhicules rechargés est augmentée.

Suivant d'autres aspects avantageux de l'invention, le procédé de détermination comprend une ou plusieurs des caractéristiques suivantes, prises isolément ou suivant toutes les combinaisons techniquement possibles :

- Le procédé comprend, pour chaque station de recharge et pour chaque pas de temps de l'intervalle de temps prédéterminé, les étapes suivantes :

  a) déterminer l'état de la station de recharge,
  b) si la station de recharge est en état inactif au début du pas de temps, alors :

  • maintenir la station de recharge est en état inactif, ou
  • basculer la station de recharge en état actif et calculer une requête initiale de charge, exprimée en quantité d'énergie électrique, avec une probabilité de basculer la station de recharge en état actif égale à une première valeur, la première valeur est calculée sur la base de :

    o l'heure et la date correspondant au pas de temps actif, et
    o une durée de session, exprimée en nombre de pas de temps, séparant le pas de temps actif du pas de temps passé au cours duquel la station de recharge a basculée en état inactif,

  c) si la station de recharge est en état actif au début du pas de temps, alors :

  • maintenir la station de recharge est en état actif, ou
  • basculer la station de recharge en état inactif, avec une probabilité de basculer la station de recharge en état inactif égale à une deuxième valeur, la deuxième valeur est calculée sur la base de :

    o l'heure et la date correspondant au pas de temps actif,
    o une durée de session, exprimée en nombre de pas de temps, séparant le pas de temps actif du pas de temps passé au cours duquel la station de recharge a basculée en état actif, et
    o une durée restante, exprimée en nombre de pas de temps, séparant le pas de temps actif d'un pas de temps futur correspondant à une heure et une date de fin de recharge du véhicule électrique, l'heure et la date de fin de recharge du véhicule électrique étant déterminés pendant un pas de temps passé au cours duquel la station de recharge a basculée en état actif,

la représentation numérique du scénario prévisionnel comprenant en outre, pour chaque pas de temps et lorsqu'une station de recharge est en état actif, la requête initiale de charge associée à la station de recharge.

- Pendant l'étape c) :

  • si la station de recharge est en état actif depuis le début du pas de temps initial de l'intervalle de temps prédéterminé, alors la probabilité de basculer la station de recharge en état inactif est égale à la deuxième valeur,

3

et

- si la station de recharge n'est pas en état actif depuis le début du pas de temps initial de l'intervalle de temps prédéterminé, alors la probabilité de basculer la station de recharge en état inactif est égale à une troisième valeur, la troisième valeur étant calculée sur la base de :

    o l'heure et la date correspondant au pas de temps actif, et
    o une durée de session, exprimée en nombre de pas de temps, séparant le pas de temps actif du pas de temps passé au cours duquel la station de recharge a basculée en état actif.

- L'étape c) comprend en outre, après le basculement de la station de recharge en état inactif :

    - basculer la station de recharge en état actif et calculer d'une requête initiale de charge, exprimée en quantité d'énergie électrique, avec une probabilité de basculer la station de recharge en état actif égale à la première valeur.

- Déterminer l'état de la station de recharge au cours de l'étape a) comprend :

    - pour le premier pas de temps de l'intervalle de temps prédéterminé, obtenir l'état de la station de recharge à partir de données fournies préalablement à la mise en oeuvre du procédé, et
    - pour chaque pas de temps de l'intervalle de temps prédéterminé différent du premier pas de temps, obtenir l'état de la station de recharge à l'issue du pas de temps précédent.

- Au cours de l'étape b), calculer la requête initiale de charge s'effectue sur la base de :

    - l'heure et la date correspondant au pas de temps actif, et
    - une durée de session, exprimée en nombre de pas de temps, séparant le pas de temps actif du pas de temps passé au cours duquel la station de recharge a basculée en état inactif.

- L'étape c) comprend :

    - vérifier si la durée restante séparant le pas de temps actif du pas de temps futur correspondant à une heure et une date annoncées de fin de recharge du véhicule électrique est égale à zéro pas de temps,
    - si la durée restante est égale à zéro pas de temps, basculer la station de recharge en état inactif, et
    - si la durée restante est supérieure à zéro pas de temps, maintenir la station de recharge est en état actif ou basculer la station de recharge en état inactif avec une probabilité de basculer la station de recharge en état inactif égale à la deuxième valeur.

- La première valeur, la deuxième valeur et, le cas échéant, la troisième valeur, sont respectivement obtenues à l'aide d'un algorithme d'apprentissage automatique de classification à renforcement de gradient.

Un autre but de l'invention est de proposer un procédé de commande d'un système de stations de recharge permettant, en utilisant de multiples scénarios prévisionnels de fonctionnement, d'obtenir une consigne de charge plus performante pour chaque station de recharge du système de stations de recharge, afin d'améliorer la satisfaction des utilisateurs des véhicules rechargés en respectant mieux la requête émise par les véhicules. Ainsi, selon un autre aspect, l'invention concerne également un procédé de commande d'un système de stations de recharge pour véhicules électriques, le système de stations de recharge comprenant :

- un système d'alimentation,
- une pluralité de stations de recharge, chaque station de recharge de la pluralité de stations de recharge étant alimentée en énergie électrique par le système d'alimentation et étant configurée pour délivrer une énergie électrique à un véhicule électrique, chaque station de recharge étant soit en état inactif, lorsqu'elle n'est pas capable de recharger un véhicule électrique, soit en état actif, lorsqu'elle est capable de recharger un véhicule électrique, et
- un dispositif de calcul, configuré pour commander la quantité d'énergie électrique délivrée à chaque station de recharge par le système d'alimentation,

le procédé étant mis en oeuvre par le dispositif de calcul et comprenant les étapes suivantes :

a) déterminer l'heure et la date de l'instant présent,

b) pour chaque station de recharge de la pluralité de station de recharge déterminer si la station de recharge est en état inactif ou en état actif à l'instant présent, et déterminer une requête initiale de charge associée à chaque station de recharge en état actif,

c) générer une pluralité de scénarios prévisionnels de fonctionnement du système de stations de recharge en mettant en oeuvre plusieurs fois le procédé de détermination d'un scénario prévisionnel tel que décrit ci-dessus,

d) établir une consigne de fonctionnement du système de stations de recharge, sur la base :

- de l'état de chaque station de recharge déterminé à l'étape b),
- de la requête initiale de charge associée à chaque station de recharge en état actif déterminée à l'étape b), et
- de la pluralité de scénarios prévisionnels de fonctionnement du système de stations de recharge générés à l'étape c),

la consigne de fonctionnement du système de stations de recharge établie attribuant une quantité d'énergie électrique à délivrer par le système d'alimentation à chaque station de recharge, et

e) commander, par le dispositif de calcul, le système d'alimentation pour délivrer la quantité d'énergie électrique attribuée à chaque station de recharge par la consigne de fonctionnement.

Grâce au procédé de commande selon l'invention, la consigne de fonctionnement du système de stations de recharge est basée sur une multitude de scénarios prévisionnels de fonctionnement intégrant la possibilité que les utilisateurs mettent fin à la recharge de leur véhicule avant le temps de fin de charge annoncé. La consigne de fonctionnement anticipe alors de telles déconnexions anticipées et est ainsi plus performante, ce qui améliore la satisfaction des utilisateurs des véhicules rechargés.

Suivant d'autres aspects avantageux de l'invention, le procédé de commande comprend une ou plusieurs des caractéristiques suivantes, prises isolément ou suivant toutes les combinaisons techniquement possibles :

- Au cours de l'étape d), l'établissement de la consigne de fonctionnement du système de stations de recharge, s'effectue à l'aide d'un modèle de programmation stochastique à deux étapes dans lequel la consigne de fonctionnement du système de stations de recharge représente une variable de décision et dans lequel la pluralité de scénarios prévisionnels de fonctionnement du système de stations de recharge, générée en mettant en oeuvre plusieurs fois le procédé de détermination d'un scénario prévisionnel au cours de l'étape c), représente une distribution de probabilité.

- Le modèle de programmation stochastique à deux étapes cherche à :

- maintenir une quantité d'énergie électrique totale délivrée par le système d'alimentation à la pluralité de stations de recharge inférieure à un seuil d'énergie maximale prédéterminé, et

- maximiser un pourcentage de charge de chaque véhicule électrique rechargé par une station de charge en état actif, le pourcentage de charge $x_t^i$ de chaque véhicule électrique étant obtenu par l'équation suivante :

$$x^i = 1 - \frac{r^i}{k^i}$$

dans laquelle $k^i$ correspond à la requête initiale de charge associée à la station de charge et $r^i$ correspond à la quantité d'énergie électrique restante à délivrer au véhicule électrique associé à la station de charge pour atteindre la requête initiale de charge.

- Au cours de l'étape d), la consigne de fonctionnement du système de stations de recharge est également établie sur la base de l'écart entre une consigne de fonctionnement déterminée par une exécution précédente du procédé de commande et la quantité d'énergie électrique effectivement délivrée à chaque station de recharge depuis ladite exécution précédente du procédé de commande.

- Les étapes a) à e) sont mises en oeuvre de manière périodique, en étant répétées après une durée égale à la durée d'un pas de temps de l'intervalle de temps prédéterminé.

- Le modèle de programmation stochastique à deux étapes cherche également à minimiser un coût de l'énergie électrique délivrée par le système d'alimentation à la pluralité de stations de recharge.

Selon un autre aspect, l'invention concerne également un système de stations de recharge pour véhicules électriques comprenant :

- un système d'alimentation,
- une pluralité de stations de recharge, chaque station de recharge de la pluralité de stations de recharge étant alimentée en énergie électrique par le système d'alimentation et étant configurée pour délivrer une énergie électrique à un véhicule électrique, et
- un dispositif de calcul, configuré pour commander la quantité d'énergie électrique délivrée à chaque station de recharge par le système d'alimentation,

dans lequel le dispositif de calcul est configuré pour mettre en oeuvre le procédé de commande décrit ci-dessus.

L'invention apparaîtra plus clairement à la lecture de la description qui va suivre, donnée uniquement à titre d'exemple non limitatif, et faite en référence aux dessins dans lesquels :

[Fig. 1] La figure 1 est une représentation schématique d'un système de stations de recharge pour véhicules électriques conforme à l'invention.
[Fig. 2] La figure 2 est un organigramme illustrant un procédé de commande d'un système de stations de recharge pour véhicules électriques conforme à l'invention.

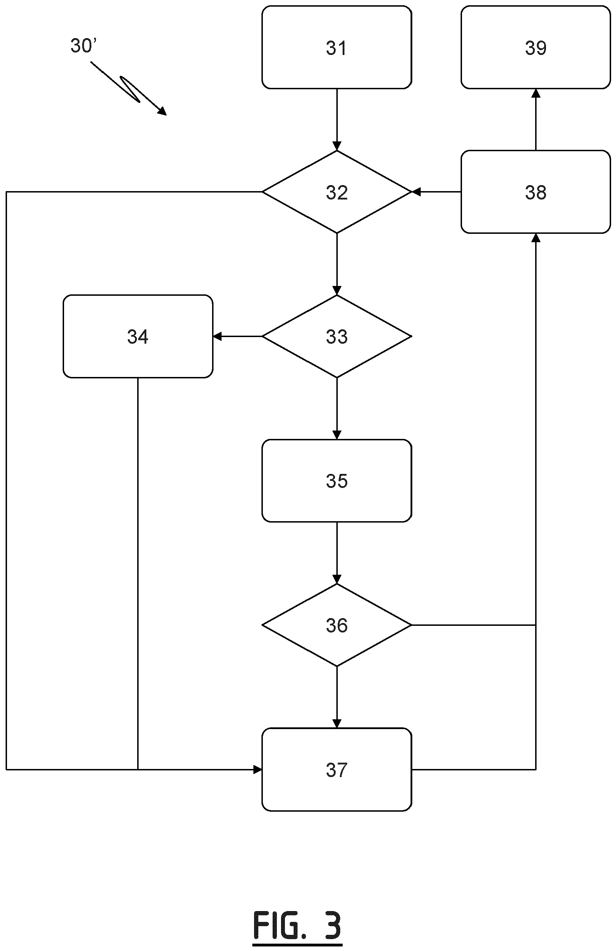

[Fig. 3] La figure 3 est un organigramme illustrant un procédé de détermination d'un scénario prévisionnel de fonctionnement d'un système de stations de recharge pour véhicules électriques conforme à l'invention.

Dans le cadre de la présente invention, le mot « instant » (en anglais *instant)* décrit le plus petit élément constitutif du temps et l'expression « intervalle de temps » (en anglais *time interval*) désigne une durée entre deux instants. En outre, un intervalle de temps est subdivisé de plusieurs pas de temps (en anglais *time step*). Ainsi, l'expression « pas de temps » désigne une durée entre deux instants, qui appartient à un intervalle de temps, la durée d'un pas de temps étant plus courte que la durée d'un intervalle de temps. Autrement dit, plusieurs pas de temps consécutifs définissent un intervalle de temps.

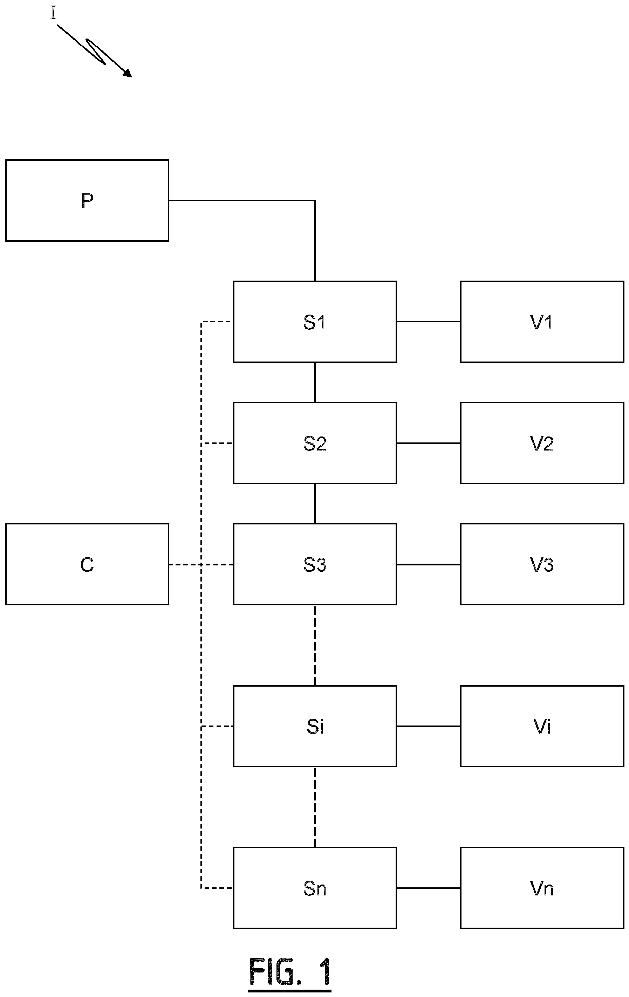

Un système de stations de recharge I pour véhicules électriques est représenté de manière schématique à la figure 1. Le système de stations de recharge I comprend un système d'alimentation P, un dispositif de calcul C et une pluralité de stations de recharge.

En pratique, le système de stations de recharge I comprend un nombre entier n de stations de recharge, la pluralité de stations de recharge est donc désignée par la référence S1 - Sn. Sur la figure 1, cinq stations de recharge sont représentées, respectivement S1, S2, S3, Si et Sn. Dans la suite de la description, chaque station de recharge de la pluralité de stations de recharge S1 - Sn est désignée par la référence Si. Les stations de recharge Si sont également désignées par l'abréviation EVCS, correspondant à l'acronyme de l'expression anglaise *Electric Vehicle Charging Station* se traduisant par « station de recharge pour véhicule électrique ».

Le système de stations de recharge I comprend un nombre de stations de recharge Si égal à N, avec N généralement compris entre 1 et 1000, par exemple compris entre 15 et 50. En pratique, l'invention peut également s'appliquer à des systèmes de stations de recharge I comprenant plus de 1000 stations de recharge Si.

Chaque station de recharge permet de recharger un véhicule électrique lui étant associé, c'est-à-dire un véhicule électrique étant connecté à la station de recharge. Ainsi, le système de stations de recharge I peut recharger simultanément une pluralité de véhicules électriques désignés par la référence V1 - Vn. Sur la figure 1, cinq véhicules électriques sont représentés, respectivement V1, V2, V3, Vi et Vn, associés, ou connectés, respectivement aux stations de recharge S1, S2, S3, Si et Sn. Dans la suite de la description, chaque véhicule électrique de la pluralité de véhicules électriques V1 - Vn est désigné par la référence Vi. Chaque véhicule électrique Vi comprend une batterie, ou un ensemble de batteries, permettant de stocker l'énergie électrique fournie par la station de recharge et d'alimenter le véhicule électrique en énergie électrique.

Le système d'alimentation P alimente en énergie électrique chacune des stations de recharge Si pour permettre la recharge des véhicules électriques Vi. Pour cela, le système d'alimentation P est raccordé à un réseau électrique non-représenté, par exemple un réseau électrique alternatif triphasé. Autrement dit, les stations de recharge Si distribuent aux véhicules électriques Vi l'énergie électrique délivrée par le système d'alimentation P.

Ainsi, chaque station de recharge Si est soit active, c'est-à-dire dans un premier état dit état actif, soit inactive, c'est-à-dire dans un second état dit état inactif.

Une station de recharge Si est en état actif lorsqu'elle recharge un véhicule électrique Vi qui lui est associé, c'est-à-dire lorsqu'elle est en mesure, ou capable, de délivrer de l'énergie électrique à ce véhicule électrique. Autrement dit, une station de recharge est en état actif même lorsqu'elle ne délivre pas d'énergie électrique à un véhicule électrique, mais est susceptible de le faire : par exemple, si un véhicule électrique est rechargé en deux phases séparées par une pause pendant laquelle le véhicule reste connecté à la station de recharge mais pendant laquelle la station de recharge ne délivre par d'énergie électrique au véhicule, alors la station de recharge est considérée comme étant en état actif pendant cette pause. Autrement dit, le système d'alimentation P est susceptible de distribuer une puissance électrique à une station de recharge en état actif. Lorsqu'une station de recharge Si est en état actif, la puissance électrique délivrée par le système d'alimentation P à la station de recharge est comprise entre 0 kW, inclus, et une puissance électrique maximale acceptable par la station de recharge. À titre d'exemple, chacune des stations de recharge Si est généralement dimensionnée pour pouvoir recevoir du système d'alimentation P une puissance électrique maximale comprise entre 3,7 kW et 7,4 kW, par exemple égale à 6 kW. Ainsi, une station de recharge en état actif demande de l'énergie électrique au système d'alimentation P, ou attend de l'énergie électrique de la part du système d'alimentation, qui délivre ou non de l'énergie électrique à la station de recharge en fonction de la consigne de fonctionnement obtenue à l'aide du procédé de commande décrit ci-après.

Une station de recharge Si est en état inactif lorsqu'elle ne recharge aucun véhicule électrique Vi, c'est-à-dire lorsqu'elle ne peut pas délivrer d'énergie électrique à un véhicule. Par exemple, une station de recharge Si est en état inactif lorsqu'aucun véhicule électrique Vi n'est connecté à la station de recharge, ou bien lorsqu'un véhicule électrique Vi est connecté à la station de recharge, mais que la recharge dudit véhicule électrique est terminée. Autrement dit, le système d'alimentation P n'est pas susceptible de distribuer une puissance électrique à une station de recharge en état inactif. Lorsqu'une station de recharge Si est en état inactif, la puissance électrique délivrée par le système d'alimentation P à la station de recharge est égale à 0 kW. Ainsi, une station de recharge en état inactif ne demande pas d'énergie électrique au système d'alimentation P.

Une station de recharge Si bascule de son état inactif vers son état actif lorsqu'un véhicule électrique Vi est connecté à la station de recharge et ainsi qu'une session de charge du véhicule électrique débute.

En pratique, lorsqu'un véhicule électrique Vi est connecté à une station de recharge Si, le véhicule électrique Vi communique à la station de recharge Si deux informations :

- une requête initiale de charge, correspondant à la quantité d'énergie électrique, exprimée en kWh, requise pour recharger le véhicule électrique, et
- de manière optionnelle, un temps de fin de charge, correspondant à une heure et une date de fin de recharge annoncée, à laquelle la session de charge du véhicule électrique doit prendre fin.

Le temps de fin de charge étant optionnel, un véhicule électrique Vi peut ne communiquer qu'une requête initiale de charge lors de sa connexion à une station de recharge Si.

La requête initiale de charge et/ou le temps de fin de charge sont de préférence choisis par un utilisateur du véhicule électrique Vi ou bien automatiquement déterminés par un ordinateur de bord du véhicule électrique.

Généralement, la requête initiale de charge associée à un véhicule électrique Vi correspond à la quantité d'énergie électrique pouvant être reçue par la batterie du véhicule électrique pour atteindre un niveau de charge de la batterie égal à 100%. Toutefois, la requête initiale de charge associée à un véhicule électrique Vi peut correspondre à une quantité d'énergie électrique ne permettant d'effectuer qu'une recharge partielle de la batterie du véhicule électrique, par exemple jusqu'à un niveau de charge égal à 80%. Dans un tel cas, la session de charge du véhicule électrique prend fin dès que la batterie du véhicule électrique est rechargée d'une quantité d'énergie électrique égale à la requête initiale de charge, même lorsque la batterie n'est pas entièrement rechargée.

Le dispositif de calcul C est configuré pour commander la puissance électrique délivrée à chaque station de recharge Si par le système d'alimentation P. Autrement dit, le dispositif de calcul C commande la distribution de l'énergie électrique délivrée par le système d'alimentation P aux stations de recharge Si.

Le dispositif de calcul C est physiquement connecté au système d'alimentation P ou bien est connecté à distance au système d'alimentation P. Par exemple, le dispositif de calcul C peut être un serveur distant.

Le dispositif de calcul C est propre à mettre en oeuvre un procédé de commande 10 correspondant à un procédé de commande du système de stations de recharge I qui sera décrit ultérieurement.

Le dispositif de calcul C est également propre à mettre en oeuvre un procédé de détermination 30' correspondant à un procédé de détermination d'un scénario prévisionnel de fonctionnement du système de stations de recharge I, qui sera décrit ultérieurement.

Le dispositif de calcul C est un circuit électronique conçu pour manipuler et/ou transformer des données représentées par des quantités électroniques ou physiques dans des registres du calculateur et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le dispositif de calcul C est réalisé au moins partiellement sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit*).

En variante, lorsque le procédé de commande 10 et/ou le procédé de détermination 30' sont mis en oeuvre par un ou plusieurs logiciels, c'est-à-dire sous forme d'un programme d'ordinateur, également appelé produit programme d'ordinateur, ils sont en outre aptes à être enregistrés sur un support, non représenté, lisible par ordinateur. Le support lisible par ordinateur est par exemple un medium apte à mémoriser des instructions électroniques et à être couplé à un bus d'un système informatique. À titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles. Ce programme d'ordinateur peut ainsi être mis en oeuvre par un ou plusieurs ordinateurs comprenant un ou plusieurs processeurs.

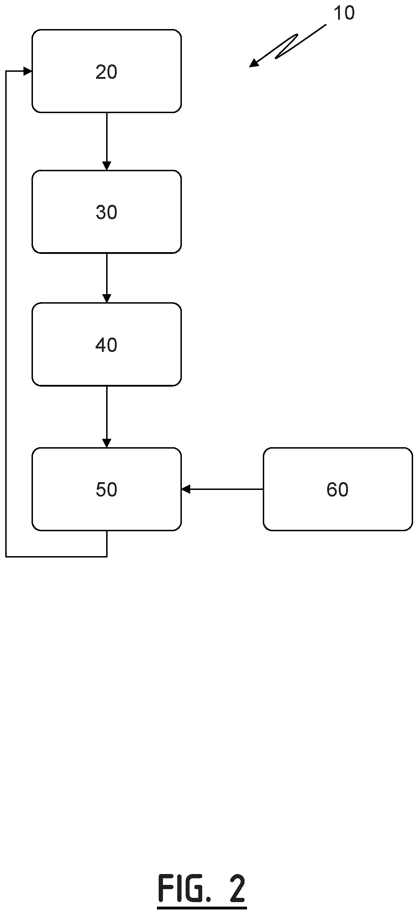

On décrit à présent, en référence à la figure 2, le procédé de commande du système de stations de recharge I, référencé dans la suite de la description en tant que « procédé de commande 10 ».

Le procédé de commande 10 vise à déterminer la puissance électrique délivrée par le système d'alimentation P à chaque station de recharge Si en état actif pour optimiser la recharge des véhicules électriques associés tout en minimisant les coûts de fonctionnement du système de stations de recharge I. Pour cela, le procédé de commande 10 se base sur la génération de plusieurs scénarios prévisionnels de fonctionnement simulant le fonctionnement du système de stations de recharge I pendant un intervalle de temps donné, en intégrant à ces simulations le risque que les utilisateurs mettent fin à la recharge de leur véhicule avant le temps de fin de charge annoncé. Ainsi, le procédé de commande 10 permet une prise de décision dans un contexte incertain. Ces scénarios prévisionnels de fonctionnement sont générés à l'aide d'un procédé de détermination décrit ci-après.

Le procédé de commande 10 est mis en oeuvre de manière périodique pour déterminer la quantité d'énergie électrique devant être délivrée par le système d'alimentation P à chaque station de recharge Si en état actif. Dans l'exemple, la période de répétition du procédé de commande 10, c'est-à-dire sa périodicité, correspond à un pas de temps. Autrement dit, la durée d'un pas de temps correspond à la durée entre deux exécutions du procédé de commande 10.

On décrit à présent un cycle du procédé de commande 10, c'est-à-dire une exécution complète du procédé de commande 10 à un instant donné.

Le procédé de commande 10 comprend une étape 20 au cours de laquelle l'heure et la date de l'instant présent sont déterminées. De préférence, l'heure et la date de l'instant présent sont déterminées par le dispositif de calcul C, par exemple à l'aide d'une horloge temps réel, ou module RTC (de l'anglais *real-time clock*), intégrée au dispositif de calcul C, ou bien sont obtenues par le dispositif de calcul C à partir d'informations externes, par exemple à partir d'informations obtenues sur Internet. Cette détermination permet notamment de déterminer le jour de la semaine correspondant à l'instant présent et ainsi de savoir si l'instant présent correspond à un jour ouvré, un jour férié, un week-end, etc...

Au cours de l'étape 20, le procédé de commande 10 comprend également, pour chaque station de recharge Si, déterminer si la station de recharge est en état actif ou en état inactif à l'instant présent, ainsi que déterminer la requête initiale de charge associée à chaque station de recharge Si en état actif.

Le procédé de commande 10 comprend ensuite une étape 30 au cours de laquelle le dispositif de calcul C génère une pluralité de scénarios prévisionnels de fonctionnement du système de stations de recharge I, pour chaque pas de temps d'un intervalle de temps prédéterminé, un pas de temps initial de l'intervalle de temps prédéterminé incluant l'instant présent, c'est-à-dire l'instant présent au cours duquel l'étape 20 est mise en oeuvre. De préférence, le pas de temps initial débute à l'instant présent.

L'intervalle de temps prédéterminé correspond ainsi à une durée de simulation, c'est-à-dire à une durée pendant laquelle les scénarios prévisionnels de fonctionnement du système de stations de recharge sont générés. Autrement dit, à chaque mise en oeuvre du procédé de commande 10, le fonctionnement du système de stations de recharge est simulé pendant une durée égale à l'intervalle de temps prédéterminé et débutant à l'instant de la mise en oeuvre du procédé de commande. Le début de cette simulation correspond ainsi à l'instant présent, c'est-à-dire à l'instant de mise en oeuvre du procédé de commande. La fin de cette simulation correspond ainsi à l'instant final de l'intervalle de temps prédéterminé, c'est-à-dire à l'instant final du dernier pas de temps de l'intervalle de temps prédéterminé.

En pratique, l'intervalle de temps prédéterminé comprend une pluralité de pas de temps d'une durée égale. La durée de chaque pas de temps est par exemple égale à 15 minutes. L'intervalle de temps prédéterminé comprend par exemple 96 pas de temps, correspondant ainsi, dans l'exemple, à une durée totale de 24 heures.

Un intervalle de temps prédéterminé long permet l'amélioration la prise en compte des variations possibles futures du fonctionnement du système de stations de recharge I, et donc permet l'amélioration de la précision de chaque scénario prévisionnel de fonctionnement. Un intervalle de temps prédéterminé court permet de diminuer le temps de calcul nécessaire à la mise en oeuvre du procédé de commande 10. Ainsi, un intervalle de temps prédéterminé d'une durée égale à 24 heures correspond à un compromis satisfaisant entre ces deux contraintes. En variante, l'intervalle de temps prédéterminé a une durée totale différente de 24 heures, par exemple 48 heures.

Un pas de temps long entraîne l'établissement de scénarios prévisionnels de fonctionnement imprécis alors qu'un pas de temps court entraîne une augmentation du temps de calcul nécessaire à l'établissement des scénarios prévisionnels de fonctionnement. Ainsi, un pas de temps d'une durée égale à 15 minutes correspond à un compromis satisfaisant entre ces deux contraintes.

En pratique, le choix de la durée du pas de temps et de la durée de l'intervalle de temps prédéterminé peut également être fait en fonction de contraintes externes, par exemple en fonction de la fréquence à laquelle le prix de l'électricité est communiqué au système de stations de recharge I.

Chaque scénario prévisionnel de fonctionnement du système de stations de recharge I est généré en mettant en oeuvre un procédé de détermination d'un scénario prévisionnel de fonctionnement du système de stations de recharge I, qui sera décrit ci-après et qui est référencé dans la suite de la description en tant que « procédé de détermination 30' ». Autrement dit, au cours de l'étape 30, le procédé de détermination 30' est mis en oeuvre plusieurs fois, de préférence entre 2 et 10000 fois, par exemple 200 fois.

Chaque scénario prévisionnel de fonctionnement du système de stations de recharge I associe, pour chaque pas de temps d'un intervalle de temps prédéterminé, l'état (actif ou inactif) de chaque station de recharge Si et, de préférence, la requête initiale de charge associée à chaque station de recharge Si en état actif.

Cette pluralité de scénarios prévisionnels de fonctionnement est utilisée dans le procédé de commande 10 pour obtenir une consigne de fonctionnement optimale, comme décrit ci-après. Ainsi, chaque scénario prévisionnel de fonctionnement n'est pas directement utilisé pour commander le fonctionnement du système de stations de recharge I. Chaque scénario prévisionnel de fonctionnement peut également être décrit comme un scénario probable de fonctionnement, un scénario possible de fonctionnement ou un scénario futur de fonctionnement.

Le procédé de commande 10 comprend ensuite une étape 40 au cours de laquelle le dispositif de calcul C établit une consigne de fonctionnement du système de stations de recharge pendant le pas de temps de l'intervalle de temps prédéterminé succédant immédiatement au pas de temps initial, cette consigne de fonctionnement étant établie sur la base :

- de l'état de chaque station de recharge Si déterminé à l'étape 20, correspondant à l'état (actif ou inactif) de chaque station de recharge Si au cours du pas de temps initial de l'intervalle de temps prédéterminé,
- de la requête initiale de charge associée à chaque station de recharge Si en état actif déterminée à l'étape 20, et
- de la pluralité de scénarios prévisionnels de fonctionnement du système de stations de recharge I générés à l'étape 30.

Dans la suite de la description, on désigne le pas de temps de l'intervalle de temps prédéterminé succédant immédiatement au pas de temps initial en tant que « pas de temps commandé ».

La consigne de fonctionnement du système de stations de recharge I est ainsi établie pendant le pas de temps initial, et attribue une quantité d'énergie électrique à délivrer par le système d'alimentation P à chaque station de recharge Si pendant le pas de temps commandé. Autrement dit, la consigne de fonctionnement est appliquée pendant le pas de temps commandé.

Autrement dit, la consigne de fonctionnement du système de stations de recharge I correspond à une décision, ou une commande, imposant le fonctionnement du système de stations de recharge pendant le pas de temps commandé. Cette consigne de fonctionnement permet de distribuer au mieux la puissance électrique du dispositif d'alimentation P aux stations de recharge Si pendant le pas de temps commandé.

Le procédé de commande 10 comprend ensuite une étape 50 au cours de laquelle le dispositif de calcul C commande le dispositif d'alimentation P pour que le dispositif d'alimentation P délivre la quantité d'énergie électrique attribuée à chaque station de recharge Si par la consigne de fonctionnement pendant le pas de temps commandé. Ainsi, l'étape 50 est mise en oeuvre pendant le pas de temps commandé, et non pendant le pas de temps initial.

Autrement dit, pendant l'étape 50, chaque station de recharge Si reçoit une quantité d'énergie électrique déterminée par la consigne de fonctionnement pour recharger le véhicule électrique Vi associé à la station de recharge SI. On comprend ainsi que les stations de recharge Si en état inactif reçoivent une quantité d'énergie électrique nulle, étant donné qu'elles ne sont pas en mesure de recharger un véhicule électrique, c'est-à-dire que le dispositif d'alimentation P leur alloue une puissance électrique nulle. Au contraire, les stations de recharge Si en état actif reçoivent chacune une quantité d'énergie électrique comprise entre 0 kWh et une quantité d'énergie électrique maximale correspondant à la quantité d'énergie électrique reçue par la station de recharge pendant la durée d'un pas de temps lorsque le système d'alimentation P délivre une puissance électrique maximale à la station de recharge, c'est-à-dire que le dispositif d'alimentation P leur alloue une puissance électrique non-nulle.

En résumé, grâce au procédé de commande 10, pendant le pas de temps initial, le dispositif de calcul C détermine l'état de chaque station de recharge Si et génère une pluralité de scénarios prévisionnels de fonctionnement du système de stations de recharge I, puis établit une consigne de fonctionnement du système de stations de recharge I sur la base des scénarios prévisionnels de fonctionnement générés, cette consigne de fonctionnement étant mise en oeuvre pendant le pas de temps commandé.

L'étape 50 correspond ainsi au fonctionnement du système de stations de recharge I au cours du pas de temps commandé. En pratique, pendant ce pas de temps, le fonctionnement réel du système de stations de recharge I ne correspond généralement pas entièrement à la consigne de fonctionnement établie pendant l'étape 40, car des actions extérieures 60 différentes de celles prévues par la consigne de fonctionnement peuvent se produire. Par exemple, un utilisateur d'un véhicule électrique Vi peut déconnecter son véhicule électrique de la station de recharge Si associée avant le temps de fin de charge annoncé sans que cette déconnexion anticipée n'ait été prévue au cours de l'étape 40, de sorte que la station de recharge Si associée ne peut pas délivrer au véhicule électrique Vi la totalité de la quantité d'énergie électrique déterminée par la consigne de fonctionnement pendant le pas de temps commandé.

Ainsi, au cours de l'étape 50, c'est-à-dire au cours du pas de temps commandé, la quantité d'énergie électrique distribuée par chaque station de recharge Si en état actif est égale ou inférieure à la quantité d'énergie électrique déterminée par la consigne de fonctionnement.

En outre, au cours du pas de temps commandé, une autre action extérieure 60 pouvant se produire correspond à la connexion d'un nouveau véhicule électrique Vi à une station de recharge Si, pour démarrer une session de charge de ce véhicule électrique. Autrement dit, une telle action extérieure entraîne le basculement de la station de recharge Si de son état inactif vers son état actif. Si une telle connexion d'un véhicule électrique à la station de recharge Si a été intégrée à la consigne de fonctionnement du système de stations de recharge, c'est-à-dire si la consigne de fonctionnement prévoyait le basculement en état actif de la borne de recharge et la fourniture à la borne de recharge d'une quantité d'énergie électrique non-nulle, alors la recharge du véhicule électrique Vi débute dès le pas de temps commandé. Dans le cas contraire, la recharge du véhicule électrique ne débute pas au cours du pas de temps commandé.

En variante, la consigne de fonctionnement établie à l'étape 40 du procédé de commande 10 comprend, en outre, une règle supplémentaire, ou règle expert, qui impose que, lorsqu'un véhicule électrique est connecté à une station de recharge Si sans que cette connexion n'ait été intégrée à la consigne de fonctionnement, alors la station de recharge débute immédiatement la recharge du véhicule électrique, par exemple à la puissance électrique maximale pouvant être délivrée par la station de recharge. Cette variante permet de ne pas retarder le démarrage de la recharge d'un véhicule électrique se connectant de manière non-prévue, améliorant ainsi la satisfaction utilisateur.

Le procédé de commande 10 est mis en oeuvre de manière périodique, c'est-à-dire que les étapes 20, 30, 40 et 50 sont mises en oeuvre de manière cyclique, en étant répétées après une durée égale à la durée des pas de temps de l'intervalle de temps prédéterminé.

On remarque que, dans l'exemple, les étapes 20, 30 et 40 du procédé de commande 10 se déroulent pendant le pas de temps initial alors que l'étape 50 se déroule pendant le pas de temps commandé.

De préférence, les étapes 20, 30 et 40 du procédé de commande 10 sont mises en oeuvre à la fin du pas de temps initial, par exemple à l'instant séparant le pas de temps initial du pas de temps commandé. De cette manière, la consigne de fonctionnement est également établie sur la base de l'éventuel changement d'état de stations de recharge Si depuis leur état actif vers leur état inactif se produisant pendant le pas de temps initial, et sur la base de l'éventuel changement d'état de stations de recharge depuis leur état inactif vers leur état actif se produisant pendant le pas de temps initial et de la requête initiale de charge associée à ces stations de recharge basculant en état actif. Ainsi, la consigne de fonctionnement utilisée au cours du pas de temps commandé tient compte des changements se produisant dans le système de stations de recharge I au cours du pas de temps initial. Autrement dit, les actions extérieures 60 se produisant pendant le pas de temps initial d'un cycle du procédé de commande 10 sont prises en compte pour l'établissement de la consigne de fonctionnement qui est mise en oeuvre pendant le pas de temps commandé de ce cycle du procédé de commande.

En pratique, la durée d'exécution des étapes 20, 30 et 40 est bien inférieure à la durée d'un pas de temps de l'intervalle de temps prédéterminé, par exemple de l'ordre de quelques secondes, ou de quelques centaines de millisecondes.

De préférence encore, la consigne de fonctionnement établie au cours de l'étape 40 est également établie sur la base de l'historique de fonctionnement réel du système de stations de recharge I.

De préférence encore, la consigne de fonctionnement établie au cours de l'étape 40 est également établie sur la base des écarts s'étant produit au cours des pas de temps précédant le pas de temps initial entre les consignes de fonctionnement établies par le procédé de commande 10 et le fonctionnement réel du système de stations de recharge, c'est-à-dire que la consigne de fonctionnement est également établie en tenant compte des erreurs passées du procédé de commande 10. En pratique, ces écarts, ou erreurs, sont provoqués par les actions extérieures 60 se produisant pendant le pas de temps commandé. Autrement dit, pour chaque pas de temps passé appartenant à un intervalle de temps passé antérieur à l'instant présent, la consigne de fonctionnement établie au cours de l'étape 40 du procédé de commande 10 mise en oeuvre pendant le pas de temps initial est également établie sur la base de l'écart entre la consigne de fonctionnement du système de stations de recharge I établie au cours de l'étape 40 mise en oeuvre pendant ledit pas de temps passé et le fonctionnement du système de stations de recharge I pendant le pas de temps succédant immédiatement audit pas de temps passé. Ainsi, la consigne de fonctionnement d'un cycle du procédé de commande est ajustée pour tenir compte des écarts entre les consignes de fonctionnement des cycles précédents et le fonctionnement réel du système, de sorte que le procédé de commande 10 agit comme un système de contrôle en boucle fermée. Dit autrement, la consigne de fonctionnement du système de stations de recharge est établie en tenant compte de l'écart entre une consigne de fonctionnement déterminée par une exécution précédente du procédé de commande 10 et la quantité d'énergie électrique effectivement délivrée à chaque station de recharge depuis ladite exécution précédente du procédé de commande.

On décrit à présent plus en détail la manière avec laquelle la consigne de fonctionnement du système de stations de recharge I est établie au cours de l'étape 40 du procédé de commande 10. De manière préférentielle, cette consigne de fonctionnement est établie à l'aide d'un modèle de programmation stochastique à deux étapes, dans lequel la consigne de fonctionnement du système de stations de recharge I représente une variable de décision et dans lequel la pluralité de scénarios prévisionnels de fonctionnement du système de stations de recharge I générée par le procédé de détermination 30' cours de l'étape 30 représente une distribution de probabilité.

Un modèle de programmation stochastique à deux étapes est aussi connu par sa traduction anglaise *two-stage stochastic programming.*

Avantageusement, ce modèle de programmation stochastique à deux étapes cherche à atteindre trois objectifs :

- maintenir une quantité d'énergie électrique totale délivrée par le système d'alimentation P à la pluralité de stations de recharge S1 - Sn, pendant chaque pas de temps de l'intervalle de temps prédéterminé, inférieure à un seuil d'énergie maximale prédéterminé,
- maximiser un pourcentage de charge de chaque véhicule électrique Vi rechargé par une station de charge Si en état actif à l'instant de sa déconnexion prévisionnelle, c'est-à-dire maximiser le pourcentage de charge prévisionnel de chaque véhicule électrique Vi à la fin de sa session de recharge,, de sorte à maximiser la satisfaction des utilisateurs des véhicules électriques Vi rechargés par le système de stations de recharge I, et
- de préférence, minimiser un coût de l'énergie électrique délivrée par le système d'alimentation P à la pluralité de stations de recharge S1 - Sn pendant l'intervalle de temps prédéterminé.

La quantité d'énergie électrique totale délivrée par le système d'alimentation P à la pluralité de stations de recharge S1 - Sn pendant le pas de temps commandé, notée *c,* est obtenue par l'équation suivante :

$$c = \sum e_t^i$$

dans laquelle $e_t^i$ correspond à la quantité d'énergie électrique délivrée par le système d'alimentation P à chaque station de charge Si pendant le pas de temps commandé.

En pratique, cette équation permet également d'obtenir la quantité d'énergie électrique totale délivrée par le système d'alimentation P à la pluralité de stations de recharge S1 - Sn pendant chaque pas de temps de l'intervalle de temps prédéterminé.

Ainsi, maintenir la quantité d'énergie électrique totale délivrée par le système d'alimentation P à la pluralité de stations de recharge S1 - Sn pendant le pas de temps commandé inférieure au seuil d'énergie maximale prédéterminé, noté $\overline{c1}$, revient à respecter l'inégalité suivante :

$$c \leq \overline{c1}$$

Le respect de cette inégalité est strict, dans la mesure où le seuil d'énergie maximale prédéterminé $\overline{c1}$ ne peut pas être dépassé.

Ce seuil correspond, par exemple, à une limitation physique de la puissance que le système d'alimentation P est apte à délivrer, ou bien un seuil imposé par le fournisseur d'électricité du système de stations de recharge I.

Le pourcentage de charge de chaque véhicule électrique Vi rechargé par une station de charge Si en état actif à l'issue du pas de temps commandé, noté $x^i$ est obtenu par l'équation suivante :

$$x^i = 1 - \frac{r^i}{k^i}$$

dans laquelle :

- $k^i$ correspond à la requête initiale de charge associée à la station de charge Si,
- $r^i$ correspond à la quantité d'énergie électrique restante à délivrer au véhicule électrique Vi associé à la station de charge Si pour atteindre la requête initiale de charge à l'issue du pas de temps commandé. Cette valeur est notamment obtenue sur la base de la quantité d'énergie électrique délivrée par la station de recharge Si au véhicule électrique depuis le début de la session de charge, et tient également compte du rendement de la recharge du véhicule électrique, c'est-à-dire des pertes entre la quantité d'énergie électrique délivrée par la station de recharge et la quantité d'énergie électrique supplémentaire effectivement stockée par la batterie du véhicule électrique.

En pratique, cette équation permet également d'obtenir le pourcentage de charge de chaque véhicule électrique Vi rechargé par une station de charge Si en état actif à l'issue de chaque pas de temps de l'intervalle de temps prédéterminé.

Le coût de l'énergie électrique délivrée par le système d'alimentation P à la pluralité de stations de recharge S1 - Sn pendant le pas de temps commandé, noté C et exprimé en quantité monétaire, par exemple en euros, est de préférence obtenu par l'équation suivante :

$$C = c \times p + \mathbf{1}_{>\overline{c1}}(c_t) \times \xi$$

dans laquelle :

- c correspond à la quantité d'énergie électrique totale délivrée par le système d'alimentation P à la pluralité de stations de recharge S1 - Sn pendant le pas de temps commandé,
- p correspond au prix de l'électricité pendant le pas de temps commandé, exprimé en quantité monétaire par quantité d'énergie électrique, ce prix de l'électricité pouvant varier d'un pas de temps à l'autre,
- $1_{>\overline{c2}}(c_t)$ est un indicateur, égal à 0 lorsque $c \leq \overline{c2}$ et égal à 1 lorsque $c > \overline{c2}$, $\overline{c2}$ correspondant à un seuil d'augmentation tarifaire prédéterminé, exprimé en quantité d'énergie électrique et inférieur au seuil d'énergie maximale prédéterminé $\overline{c1}$, et
- $\xi$ correspond à une pénalité, exprimée en quantité monétaire, devant être payée si la quantité d'énergie électrique totale délivrée par le système d'alimentation P dépasse le seuil d'augmentation tarifaire prédéterminé.

En pratique, cette équation permet également d'obtenir le coût de l'énergie électrique délivrée par le système d'alimentation P à la pluralité de stations de recharge S1 - Sn pendant chaque pas de temps de l'intervalle de temps prédéterminé.

En variante, le coût C est calculé sans tenir compte du seuil d'augmentation tarifaire prédéterminé, c'est-à-dire qu'aucune pénalité n'est payée si la quantité d'énergie électrique totale délivrée par le système d'alimentation P dépasse le seuil d'augmentation tarifaire prédéterminé.

Pour quantifier l'atteinte des deux objectifs consistant à maximiser le pourcentage de charge de chaque véhicule électrique Vi et minimiser le coût de l'énergie électrique délivrée par le système d'alimentation P, pendant le pas de temps commandé, mais également pendant chaque pas de temps de l'intervalle de temps prédéterminé, on définit une variable de coût total, notée L et exprimée en quantité d'unité monétaire. Ce coût total est obtenu à l'aide de l'équation suivante :

$$L = C + w_s \times (1 - x^i)$$

dans laquelle $w_s$ est un coefficient, exprimé en quantité d'unité monétaire, exprimant le poids donné à la satisfaction des utilisateurs. Autrement dit, le coefficient $w_s$ attribue une valeur monétaire à l'insatisfaction des utilisateurs, ce qui permet de quantifier ces deux objectifs à l'aide d'une seule variable.

Avantageusement, en modifiant la valeur du coefficient $w_s$, on pondère l'importance donnée à la satisfaction des utilisateurs par rapport au coût de l'énergie électrique, ce qui permet de donner plus d'importance au deuxième objectif ou au troisième objectif. En pratique, la valeur du coefficient $w_s$ est choisie en fonction des spécificités de chaque système de stations de recharge I et des préférences des gestionnaires de ces systèmes.

Ainsi, le modèle de programmation stochastique à deux étapes cherche à minimiser le coût total L tout en maintenant la quantité d'énergie électrique totale c délivrée par le système d'alimentation P à la pluralité de stations de recharge S1 - Sn pendant le pas de temps commandé inférieure au seuil d'énergie maximale prédéterminé $\overline{c1}$.

En pratique, pour atteindre ces trois objectifs, le modèle de programmation stochastique à deux étapes utilise une collection de K échantillons tirés d'une distribution de probabilité. Chaque échantillon k de la collection K correspond à un scénario prévisionnel de fonctionnement du système de station de recharge I obtenu grâce au procédé de détermination 30' décrit ci-après et associant, pour chaque pas de temps d'un intervalle de temps prédéterminé, l'état (actif ou inactif) de chaque station de recharge Si et la requête initiale de charge associée à chaque station de recharge Si en état actif. Le modèle de programmation stochastique à deux étapes s'exprime alors selon l'équation suivante :

$$\arg\min_{u_{t_0} \in U} \min_{\substack{u_t^k, \forall k \in \{1,\dots,K\}, \\ \forall t \in \{t_0,\dots,t_0+R\}}} \sum_{\substack{k \in \{1,\dots,K\} \\ t \in \{t_0,\dots,t_0+R\}}} L_t\big(x_t^k, u_t^k, \widehat{w}_t^k\big)$$

$$\text{s.t.} \quad x_{t+1}^k = f_t\big(x_t^k, u_t^k, \widehat{w}_t^k\big), \, \forall k \in \{1,\dots,K\}, \quad \forall t, \, t_0 \leq t \leq t_0 + R$$

$$g_t\left(x_t^k, u_t^k, \widehat{w}_t^k\right) \leq 0, \; \forall k \in \{1, \ldots, K\}, \quad \forall t, \, t_0 \leq t \leq t_0 + R$$

$$x_{t_0}^k = x_{t_0}, \; u_{t_0}^k = u_{t_0}, \quad \forall k \in \{1, \ldots, K\}$$

dans laquelle :

- $t_0$ et $t_{0+R}$ correspondent respectivement au pas de temps initial de l'intervalle de temps prédéterminé et au dernier pas de temps de l'intervalle de temps prédéterminé, l'indice t représentant un pas de temps dans cet intervalle de temps prédéterminé

- $L_t\left(x_t^k, u_t^k, \widehat{w}_t^k\right)$ correspond au coût L calculé pour le pas de temps *t*,

- $x_t^k$ est une première variable d'état représentant, pour chaque échantillon k de la collection K et pour chaque pas de temps t, l'état (actif ou inactif) de chaque station de recharge Si, la requête initiale de charge $k^i$ associée à chaque station de recharge Si en état actif et la quantité d'énergie électrique $r^i$ restante à délivrer au véhicule électrique Vi associé à chaque station de charge Si en état actif.

- $u_t^k$ est une deuxième variable d'état représentant, pour chaque échantillon k de la collection K et pour chaque pas de temps t, l'énergie électrique délivrée par le système d'alimentation P à chaque station de recharge Si.

- $\widehat{w}_t^k$ est une variable exogène d'incertitude représentant, pour chaque échantillon *k* de la collection K et pour chaque pas de temps t, une probabilité de changement d'état de chaque station de recharge Si entre ses états actif et inactif, et, pour chaque changement d'état depuis l'état inactif vers l'état actif d'une station de recharge Si, une requête initiale de charge $k^i$ et un temps de fin de charge annoncé associés, le temps de fin de charge annoncé étant exprimé en nombre de pas de temps.

- $f_t\left(x_t^k, u_t^k, \widehat{w}_t^k\right)$ représente une fonction dynamique permettant, pour chaque pas de temps *t+1,* d'obtenir la première variable d'état $x_{t+t}^k$ à partir de la première variable d'état $x_t^k$, de la deuxième variable d'état $u_t^k$ et de la variable exogène d'incertitude $\widehat{w}_t^k$ du pas de temps t.

- $g_t\left(x_t^k, u_t^k, \widehat{w}_t^k\right) \leq 0$ représentant les contraintes devant être respectées par le modèle de programmation stochastique à deux étapes

La résolution de l'équation exprimant le modèle de programmation stochastique à deux étapes permet alors d'obtenir la consigne de fonctionnement du système de stations de recharge I utilisée pour commander la quantité d'énergie électrique délivrée par le système d'alimentation P à chaque station de recharge Si pendant le pas de temps commandé au cours de l'étape 50.

En pratique, cette résolution consiste à trouver une consigne de fonctionnement qui permet, lorsqu'elle est appliquée au pas de temps commandé de tous les scénarios prévisionnels de fonctionnement obtenus grâce au procédé de détermination 30' décrit ci-après, d'atteindre les objectifs suivants :

- pour chacun des scénarios prévisionnels, maximiser le pourcentage de charge prévisionnel de chaque véhicule électrique Vi à la fin de sa session de recharge,
- pour chacun des scénarios prévisionnels, maintenir en permanence la quantité d'énergie électrique totale délivrée par le système d'alimentation P à la pluralité de stations de recharge S1 - Sn inférieure au seuil d'énergie maximale prédéterminé, et
- pour chacun des scénarios prévisionnels, en minimisant le coût de l'énergie électrique délivrée par le système d'alimentation P à la pluralité de stations de recharge S1 - Sn.

Autrement dit, cette résolution consiste à trouver la consigne de fonctionnement qui maximise l'atteinte des trois objectifs recherchés par le modèle de programmation stochastique à deux étapes lorsqu'elle est appliquée au pas de temps commandé de chacun des scénarios prévisionnels de fonctionnement.

Ainsi, la consigne de fonctionnement déterminée en résolvant l'équation exprimée ci-dessus ne correspond pas à une consigne qui serait parfaite pour la mise en oeuvre d'un unique scénario prévisionnel de fonctionnement sélectionné parmi tous les scénarios prévisionnels de fonctionnement, mais à une consigne permettant d'optimiser l'atteinte des objectifs, en moyenne, sur chacun des scénarios prévisionnels de fonctionnement.

On décrit à présent, en référence à la figure 2, le procédé de détermination d'un scénario prévisionnel mis en oeuvre plusieurs fois au cours de l'étape 30, c'est-à-dire le procédé de détermination 30'. Chaque mise en oeuvre du procédé de détermination 30' permet d'obtenir un échantillon k de la collection K. Le procédé de détermination 30' est, de préférence, mis en oeuvre par le dispositif de calcul C.

Le procédé de détermination 30' permet de déterminer une représentation numérique d'un scénario prévisionnel de fonctionnement du système de stations de recharge I comprenant, pour chaque pas de temps de l'intervalle de temps prédéterminé, l'état de chaque station de recharge Si. Cette représentation numérique est, par exemple, un fichier informatique stocké dans une mémoire du dispositif de calcul C et utilisable par le dispositif de calcul pour mettre en oeuvre le procédé de commande 10.

Le procédé de détermination 30' est mis en oeuvre de manière cyclique, pour chaque pas de temps de l'intervalle de temps prédéterminé.

De manière résumée, le procédé de détermination 30' comprend, pour chaque station de recharge Si et pour chaque pas de temps de l'intervalle de temps prédéterminé, maintenir la station de recharge Si dans son état ou changer l'état de la station de recharge, avec une probabilité de changer l'état de la station de recharge, c'est-à-dire de basculer l'état de la station de recharge, calculée sur la base de :

- l'heure et la date correspondant au pas de temps actif,
- une durée de session, exprimée en nombre de pas de temps, séparant le pas de temps actif du dernier pas de temps passé au cours duquel la station de recharge Si a changé d'état, et
- si la station de recharge est en état actif, une durée restante, exprimée en nombre de pas de temps, séparant le pas de temps actif d'un pas de temps futur correspondant à une heure et une date de fin de recharge du véhicule électrique Vi, l'heure et la date de fin de recharge du véhicule électrique étant déterminés pendant un pas de temps passé au cours duquel la station de recharge Si a basculée en état actif.

Plus précisément, le procédé de détermination 30' démarre au cours d'une étape 31, qui correspond à l'exécution du procédé de détermination 30' pour le pas de temps initial de l'intervalle de temps prédéterminé.

Le procédé de détermination 30' comprend ensuite une étape 32, au cours de laquelle, pour chaque station de recharge Si, l'état de la station de recharge Si est déterminé, c'est-à-dire qu'il est déterminé si la station de recharge Si est en état actif ou inactif.

L'étape 32 est mise en oeuvre après l'étape 31, lorsque le pas de temps actif correspond au pas de temps initial de l'intervalle de temps prédéterminé, ou bien après l'étape 38 décrite ci-après, lorsque le pas de temps actif est différent du pas de temps initial.

En pratique, pour le pas de temps initial de l'intervalle de temps prédéterminé, l'état de chaque station de recharge Si est déterminé en obtenant l'état de la station de recharge à partir de données d'entrées, fournies préalablement à la mise en oeuvre du procédé. Autrement dit, pour le pas de temps initial, l'état de chaque station de recharge déterminé au cours de l'étape 32 correspond à l'état réel de chaque station de recharge.

En outre, pour les pas de temps distincts du pas de temps initial, l'état de chaque station de recharge Si est déterminé en obtenant l'état de la station de recharge à l'issue du pas de temps précédent, par exemple à l'instant séparant le pas de temps initial du pas de temps commandé, c'est-à-dire au cours de l'étape 38 du cycle précédent du procédé de détermination 30'.

Si la station de recharge Si est en état actif, le procédé de détermination 30' se poursuit avec des étapes 33 à 36 décrites ci-après.

Si la station de recharge Si est en état inactif, le procédé de détermination 30' se poursuit avec une étape 37 décrit ci-après.

Le procédé de détermination 30' comprend donc une étape 33 mise en oeuvre après l'étape 32 pour les stations de recharge Si en état actif, au cours de laquelle la durée séparant le pas de temps actif du pas de temps futur correspondant à l'heure et la date de fin de recharge annoncés du véhicule électrique, c'est-à-dire au temps de fin de charge annoncé, est mesurée. Cette durée est nommée « durée restante » dans la suite de la description. En pratique, la durée restante est exprimée en un nombre de pas de temps séparant le pas de temps actif du pas de temps futur comprenant le temps de fin de charge annoncé.

On comprend que cette durée ne peut pas être établie pour les stations de recharge Si en état actif pour lesquelles le véhicule électrique Vi n'a pas communiqué de temps de fin de charge annoncé lors de sa connexion à la station de recharge.

Si la durée restante mesurée au cours de l'étape 33 est égale à zéro pas de temps, c'est-à-dire si le pas de temps actif correspond au pas de temps comprenant le temps de fin de charge annoncé, alors le procédé de détermination 30' se poursuit avec une étape 34, au cours de laquelle la station de recharge Si bascule en état inactif. L'étape 34 permet donc de tenir compte des temps de fin de charge annoncés par les utilisateurs des véhicules électriques Vi. À la suite de l'étape 34, le procédé de détermination 30' se poursuit avec l'étape 37 décrite ci-après.

Le procédé de détermination 30' comprend donc une étape 37 mise en oeuvre après l'étape 32 pour les stations de recharge Si en état inactif, ou mise en oeuvre après l'étape 34 pour les stations de recharge Si détectées en état actif au cours de l'étape 32 et ayant basculées en état inactif au cours de l'étape 34.

Au cours de l'étape 37, le procédé de détermination 30' maintient la station de recharge Si en état inactif, ou bien bascule la station de recharge en état actif, avec une probabilité de basculer la station de recharge en état actif comprise entre 0 et 1.

En pratique, la probabilité de basculer la station de recharge en état actif est égale à une première valeur. La méthode d'obtention de la première valeur est décrite ci-après.

En outre, au cours de l'étape 37, lorsque la station de recharge Si est basculée en état actif, alors une requête initiale de charge $k^i$, exprimée en quantité d'énergie électrique, est calculée et associée à la station de recharge. Cette requête initiale de charge $k^i$ est calculée en utilisant un modèle de régression (en anglais : *regressor* ou *regressor model*). La méthode de calcul de la requête initiale de charge utilisant un modèle de régression est décrit ci-après.

Dans l'exemple, au cours de l'étape 37, lorsque la station de recharge Si est basculée en état actif, alors aucun temps de fin de charge associé à la station de recharge Si n'est estimé. En variante de l'invention, au cours de l'étape 37, lorsque la station de recharge Si est basculée en état actif, un temps de fin de charge associé à la station de recharge Si estimé.

À la suite de l'étape 37, le procédé de détermination 30' se poursuit avec une étape 38 décrite ci-après.

Si la durée restante mesurée au cours de l'étape 33 est supérieure à zéro pas de temps, ou bien si la station de recharge Si est en état actif sans temps de fin de charge annoncé associé, alors le procédé de détermination 30' se poursuit avec une étape 35.

Au cours de l'étape 35, le procédé de détermination 30' maintient la station de recharge Si en état actif, ou bien bascule la station de recharge en état inactif avec une probabilité de basculer la station de recharge en état inactif comprise entre 0 et 1.

En pratique, la probabilité de basculer la station de recharge Si en état inactif est égale à une deuxième valeur lorsqu'un temps de fin de charge est associé à la station de recharge, ou bien est égale à une troisième valeur lorsqu'aucun temps de fin de charge n'est associé à la station de recharge. Les méthodes d'obtention des deuxièmes et troisièmes valeurs sont décrites ci-après.

On comprend alors que, dans l'exemple, pour toute station de recharge Si ayant basculé en état actif au cours d'une étape 37 d'un cycle précédent du procédé de détermination 30', alors la probabilité de basculer la station de recharge Si en état inactif est égale à la troisième valeur, puisqu'aucun temps de fin de charge associé à une station de recharge Si n'est estimé au cours de l'étape 37. Ainsi, la probabilité de basculer la station de recharge Si en état inactif n'est égale à la deuxième valeur que pour les stations de recharge Si étant en état actif depuis le démarrage du procédé de détermination 30', c'est-à-dire depuis l'étape 31, ou encore depuis le début du pas de temps initial de l'intervalle de temps prédéterminé. Autrement dit, la probabilité de basculer la station de recharge Si en état inactif n'est égale à la deuxième valeur que pour les stations de recharge Si ayant réellement basculé en état actif préalablement à la mise en oeuvre du procédé de détermination 30', lorsqu'un véhicule électrique Vi a réellement été branché à ces stations de recharge et qu'un temps de fin de charge a réellement été annoncé.

Après l'étape 35, le procédé de détermination 30' comprend une étape 36, au cours de laquelle l'état de la station de recharge Si est déterminé, c'est-à-dire qu'il est déterminé si la station de recharge Si est en état actif ou inactif. On comprend que, au cours de l'étape 35, la station de recharge est en état actif si elle n'a pas basculé d'état au cours de l'étape 33, et qu'elle est en état inactif si elle a basculé d'état au cours de l'étape 33.

Si, au cours de l'étape 36, la station de recharge Si est en état inactif, le procédé de détermination 30' se poursuit avec l'étape 37 telle que décrite ci-dessus, puis avec l'étape 38 telle que décrite ci-après. On comprend alors que, au cours d'un même pas de temps, une station de recharge Si initialement en état actif peut successivement basculer en état inactif, au cours de l'étape 35, puis basculer en état actif, au cours de l'étape 37.

Si, au cours de l'étape 36, la station de recharge Si est en état actif, le procédé de détermination 30' se poursuit avec l'étape 38.

L'étape 38 correspond à la fin d'un cycle du procédé de détermination 30'. Autrement dit, au début de l'étape 38, les étapes 32 à 37 ont été mises en oeuvre pour chacune des stations de recharge Si du système de stations de recharge I. Ainsi, un cycle du procédé de détermination 30' correspond à une mise en oeuvre des étapes 32 à 38.

Au cours de l'étape 38, il est déterminé si le pas de temps actif correspond au dernier pas de temps de l'intervalle de temps prédéterminé.

Si le pas de temps actif est différent du dernier pas de temps de l'intervalle de temps prédéterminé, alors le procédé de détermination 30' passe au pas de temps suivant, c'est-à-dire que le pas de temps actif est incrémenté, et les étapes 32 à 37 sont de nouveau mises en oeuvre comme décrit ci-dessus.

Si le pas de temps actif correspond au dernier pas de temps de l'intervalle de temps prédéterminé, alors le procédé de détermination 30' se termine avec une étape 39.

Au cours de l'étape 39, le procédé de détermination 30' détermine la représentation numérique du scénario prévisionnel de fonctionnement du système de stations de recharge I comprenant, pour chaque pas de temps de l'intervalle de temps prédéterminé, l'état de chaque station de recharge Si à l'issue du pas de temps, c'est-à-dire au cours de l'étape 38. De préférence, cette représentation numérique comprend également, pour chaque pas de temps et lorsqu'une station de recharge Si est en état actif, la requête initiale de charge $k^i$ associée à la station de recharge. Ce scénario prévisionnel de fonctionnement du système de stations de recharge I correspond ainsi à un échantillon k de la collection K utilisée par le modèle de programmation stochastique à deux étapes mis en oeuvre au cours de l'étape 40 du procédé de commande 10.

On décrit à présent les méthodes permettant de calculer les première, deuxième et troisième valeurs ainsi que la requête initiale de charge.

La première valeur, correspondant à la probabilité de basculer une station de recharge Si de son état inactif vers son état actif au cours de l'étape 37, est calculée sur la base de :

- l'heure et la date correspondant au pas de temps actif, et
- une durée de session, exprimée en nombre de pas de temps, séparant le pas de temps actif du pas de temps passé au cours duquel la station de recharge Si a basculée en état inactif.

En pratique, si le pas de temps passé au cours duquel la station de recharge Si a basculée en état inactif ne fait pas partie de l'intervalle de temps prédéterminé, c'est-à-dire s'il est antérieur au pas de temps initial, alors le nombre de pas de temps séparant ce pas de temps passé du pas de temps initial est fourni au procédé de détermination 30' en tant que donnée d'entrée.

Sur la base de ces informations, la première valeur est, de préférence, obtenue à l'aide d'un algorithme d'apprentissage automatique de classification à renforcement de gradient, en utilisant par exemple la bibliothèque CatBoost en version 1.2. Un classificateur à renforcement de gradient est aussi connu par sa traduction anglaise *gradient-boosting classifier.*

Avantageusement, cet algorithme d'apprentissage automatique est entraîné sur la base de l'historique de fonctionnement du système de stations de recharge I. Ainsi, la première valeur reflète la probabilité qu'à une heure et une date donnée, une station de recharge bascule en état actif en tenant compte de la durée pendant laquelle cette station de recharge est restée en état inactif. Par exemple, une station de recharge a une probabilité plus importante de basculer en état actif un jour ouvré en fin de journée, comme à 18h, qu'un dimanche en pleine nuit, comme à 4h.

La deuxième valeur, correspondant à la probabilité de basculer une station de recharge Si de son état actif vers son état inactif lorsqu'un temps de fin de charge est associé à la station de recharge, au cours de l'étape 35, est calculée sur la base de :

- l'heure et la date correspondant au pas de temps actif,
- une durée de session, exprimée en nombre de pas de temps, séparant le pas de temps actif du pas de temps passé au cours duquel la station de recharge Si a basculée en état actif, et
- une durée restante, exprimée en nombre de pas de temps, séparant le pas de temps actif du pas de temps futur incluant le temps de fin de charge annoncé.

En pratique, le nombre de pas de temps séparant le pas de temps passé au cours duquel la station de recharge Si a basculée en état actif du pas de temps initial est fourni au procédé de détermination 30' en tant que donnée d'entrée, dans la mesure où ce pas de temps passé est antérieur au pas de temps initial, puisqu'un temps de fin de charge annoncé n'est associé à une station de charge que lorsque cette station de charge était en état actif avant le démarrage du procédé de détermination 30'.

Sur la base de ces informations, la deuxième valeur est, de préférence, obtenue à l'aide d'un algorithme d'apprentissage automatique de classification à renforcement de gradient, en utilisant par exemple la bibliothèque CatBoost en version 1.2.

Avantageusement, cet algorithme d'apprentissage automatique est entraîné sur la base de l'historique de fonctionnement du système de stations de recharge, de manière analogue à celui utilisé pour la première valeur.

Le fait que la deuxième valeur soit obtenue notamment en tenant compte de la durée restante séparant le pas de temps actif du pas de temps futur incluant le temps de fin de charge annoncé associée à un entraînement sur la base de l'historique de fonctionnement du système de stations de recharge I est particulièrement avantageux, car cela permet de tenir compte, pour le calcul de la probabilité que chaque station de recharge bascule en état inactif, d'une éventuelle déconnexion anticipée du véhicule électrique en cours de recharge, c'est-à-dire d'un éventuel non-respect du temps de fin de charge annoncé par l'utilisateur du véhicule. Autrement dit, la deuxième valeur reflète également la probabilité qu'une station de recharge Si bascule en état inactif en tenant compte du risque de non-respect du temps de fin de charge annoncé par l'utilisateur du véhicule électrique associé à cette station de recharge. Par exemple, plus le temps de fin de recharge annoncé est proche du pas de temps actif, plus la probabilité d'une déconnexion anticipée est élevée, ce qui est donc pris en compte dans le calcul de la deuxième valeur.

La troisième valeur, correspondant à la probabilité de basculer une station de recharge Si de son état actif vers son état inactif lorsqu'aucun temps de fin de charge n'est associé à la station de recharge, au cours de l'étape 35, est calculée sur la base de :

- l'heure et la date correspondant au pas de temps actif, et
- une durée de session, exprimée en nombre de pas de temps, séparant le pas de temps actif du pas de temps passé au cours duquel la station de recharge Si a basculée en état actif.

En pratique, si le pas de temps passé au cours duquel la station de recharge Si a basculée en état actif ne fait pas partie de l'intervalle de temps prédéterminé, c'est-à-dire s'il est antérieur au pas de temps initial, alors le nombre de pas de temps séparant ce pas de temps passé du pas de temps initial est fourni au procédé de détermination 30' en tant que donnée d'entrée.

Sur la base de ces informations, la troisième valeur est, de préférence, obtenue à l'aide d'un algorithme d'apprentissage automatique de classification à renforcement de gradient, en utilisant par exemple la bibliothèque CatBoost en version 1.2.

Avantageusement, cet algorithme d'apprentissage automatique est entraîné sur la base de l'historique de fonctionnement du système de stations de recharge I, de manière analogue à celui utilisé pour la première valeur.

La requête initiale de charge $k^i$ obtenue au cours de l'étape 37 est calculée par le modèle de régression sur la base de :

- l'heure et la date correspondant au pas de temps actif, et
- une durée de session, exprimée en nombre de pas de temps, séparant le pas de temps actif du pas de temps passé au cours duquel la station de recharge Si a basculée en état inactif. La durée de session correspond ainsi à la durée passée par la station de recharge Si en état inactif avant son basculement en état actif, puisque la requête initiale de charge est calculée lors du basculement de la station de recharge en état actif.

En pratique, si le pas de temps passé au cours duquel la station de recharge Si a basculée en état inactif ne fait pas partie de l'intervalle de temps prédéterminé, c'est-à-dire s'il est antérieur au pas de temps initial, alors le nombre de pas de temps séparant ce pas de temps passé du pas de temps initial est fourni au procédé de détermination 30' en tant que donnée d'entrée.

De préférence, le modèle de régression est mis en oeuvre en utilisant un algorithme d'apprentissage automatique, en utilisant par exemple le modèle de régression CatBoostRegressor disponible dans la bibliothèque CatBoost en version 1.2.

En pratique, le modèle de régression est un modèle d'apprentissage automatique permettant de prédire une variable quantitative en fonction d'autres variables. Ainsi, dans l'exemple, le modèle de régression permet de prédire la requête initiale de charge sur la base de l'heure et la date correspondant au pas de temps actif et de la durée de session séparant le pas de temps actif du pas de temps passé au cours duquel la station de recharge Si a basculée en état inactif. Ainsi, le modèle de régression est notamment entraîné sur la base de l'historique de fonctionnement du système de stations de recharge I.

Avantageusement, cet algorithme d'apprentissage automatique est entraîné sur la base de l'historique de fonctionnement du système de stations de recharge I, de manière analogue à celui utilisé pour la première valeur.

Grâce au procédé de détermination 30', la collection de K échantillons utilisée pour la mise en oeuvre du modèle de programmation stochastique à deux étapes du procédé de commande 10 est qualitative, car elle intègre le risque de déconnexion anticipée des véhicules électriques par leurs utilisateurs. Ainsi, le procédé de commande 10 est plus fiable et permet d'aboutir à des prévisions plus proches de la réalité : la consigne de fonctionnement émise est ainsi plus performante pour obtenir une bonne satisfaction utilisateur tout en minimisant le coût de l'électricité consommée par le système de stations de recharge et sans dépasser le seuil d'énergie maximale prédéterminé. En particulier, pour minimiser ce coût, le procédé de commande 10 tend à lisser la recharge des véhicules électriques Vi dans le temps, pour éviter la survenue de pics de charge pendant lesquels le système de stations de recharge consomme une puissance électrique très importante. La prise en compte des déconnexions anticipées permet d'effectuer ce lissage tout en minimisant le risque de retarder la recharge d'un véhicule électrique au point que la survenue d'une déconnexion anticipée aboutirait à la déconnexion d'un véhicule électrique ayant atteint un faible pourcentage de sa requête initiale de charge, voire n'ayant pas du tout été rechargé.

Par rapport aux procédés connus de commande de systèmes de stations de recharge, le procédé de commande 10 de l'invention permet ainsi une augmentation importante de la satisfaction utilisateur sans augmentation significative du coût de l'électricité consommée par le système de stations de recharge.

Avantageusement, le procédé de détermination 30' peut également être utilisé pour d'autres applications que le procédé de commande 10. Par exemple, les scénarios prévisionnels de fonctionnement obtenus à l'aide du procédé de détermination 30' peuvent permettre d'aider au dimensionnement d'un système de stations de recharge en cours de conception, notamment en aidant à choisir une puissance électrique maximale du système d'alimentation, pour tenir compte des pics de charge simulés grâce aux scénarios prévisionnels de fonctionnement.

Dans l'exemple, la durée séparant deux exécutions du procédé de commande 10 est égale à la durée d'un pas de temps de l'intervalle de temps prédéterminé sur lequel le procédé de détermination 30' est mis en oeuvre. En variante de l'invention, la durée séparant deux exécutions du procédé de commande 10 est différente de la durée d'un pas de temps de l'intervalle de temps prédéterminé, par exemple égale à un multiple entier de la durée d'un pas de temps de l'intervalle de temps prédéterminé. Dans une telle variante, la périodicité du procédé de commande 10 est alors différente de la périodicité du procédé de détermination 30'.

En variante de l'invention, le procédé de détermination 10 n'est pas mis en oeuvre de manière périodique. Par exemple, la durée séparant deux exécutions du procédé de commande 10 varie en fonction de l'heure, en étant plus longue la nuit et plus courte le jour, et/ou en fonction du taux d'occupation du système de stations de recharge I, la durée séparant deux exécutions du procédé de commande 10 diminuant lorsqu'un grand nombre de véhicules électriques sont connectés au système de stations de recharge. Selon un autre exemple, le procédé de détermination 10 est exécuté dès qu'un événement se produit sur le système de stations de recharge I, tel qu'une connexion ou une déconnexion d'un véhicule électrique à une station de recharge Si. Selon un autre exemple, la durée séparant deux exécutions du procédé de commande 10 est choisie pour correspondre à la fréquence de modification du prix de l'électricité, dans le cas où le prix de l'électricité est variable au cours d'une journée. Autrement dit, le procédé de commande 10 est synchronisé sur les variations de prix de l'électricité.

Dans l'exemple, les étapes 20, 30 et 40 du procédé de commande 10 sont présentées comme étant exécutées au cours du pas de temps initial, ou à la fin du pas de temps initial, et l'étape 50 est présentée comme étant exécutée au cours du pas de temps commandé. Une autre manière de décrire l'invention est de ne pas considérer de pas de temps initial et de pas de temps commandé, mais de considérer que les étapes 20, 30 et 40 du procédé de commande 10 sont exécutée à un instant initial du procédé de commande 10, puis que l'étape 50 est exécutée pendant une période de temps, qui débute à l'instant initial. Autrement dit, les étapes 20, 30 et 40 sont mises en oeuvre à l'instant où l'exécution du procédé de commande 10 débute, puis la consigne de fonctionnement obtenue est ensuite appliquée pendant cette période de temps. En pratique, la durée de cette période de temps peut être égale, ou différente, de la durée d'un pas de temps de l'intervalle de temps prédéterminé utilisé pour exécuter le procédé de détermination 30' et la durée de cette période de temps correspond à la durée entre deux exécutions du procédé de commande 10. Dit autrement, on exécute les étapes de calcul du procédé de commande 10, puis on applique la consigne de fonctionnement pendant correspondant à la période de temps, c'est-à-dire jusqu'à la prochaine mise en oeuvre du procédé, puis le procédé est relancé soit périodiquement, soit de manière irrégulière, par exemple à la demande, suite à une connexion ou déconnexion d'un véhicule. Cette description alternative de l'invention ne change pas la manière dont les étapes 20 à 50 du procédé de commande 10 sont exécutées.

En variante, à l'issue de l'étape 34 au cours de laquelle une station de recharge SI pour laquelle la durée restante est égale zéro pas de temps a basculé en état inactif, le procédé de détermination 30' se poursuit avec l'étape 38. Autrement dit, dans une telle variante, une station de recharge ne peut pas successivement basculer en état inactif au cours de l'étape 34, puis basculer en état actif au cours de l'étape 37, pendant un même pas de temps.

En variante, le procédé de détermination 30' ne comprend pas les étapes 33 et 34, ou bien ne comprend pas les étapes 33 et 34 à chaque cycle. Par exemples, ces étapes ne sont pas mises en oeuvre lorsqu'aucune des stations de recharge Si n'est associée à un temps de fin de charge annoncé. Dans une telle variante, à l'issue de l'étape 32 et pour chaque station de recharge Si en état actif, le procédé de détermination 30' se poursuit avec l'étape 35.

En variante, au cours du procédé de détermination 30', lorsque le temps de fin de charge annoncé d'un véhicule électrique Vi associé à une station de recharge Si est atteint, il n'est pas mis fin à la recharge du véhicule électrique Vi si la batterie du véhicule électrique n'est pas rechargée à 100%. Dans une telle variante, le procédé de détermination 30' ne comprend pas les étapes 33 et 34, ou bien l'étape 34 n'est mise en oeuvre que lorsque, outre le fait que le temps de fin de charge soit atteint, la batterie du véhicule électrique considéré est entièrement rechargée. Une telle variante permet d'améliorer la satisfaction des utilisateurs, car une déconnexion tardive d'un véhicule électrique, c'est-à-dire après le temps de fin de charge, permet alors d'augmenter la recharge de la batterie du véhicule électrique.

En variante, le procédé de détermination 30' ne comprend pas l'étape 36 et, à l'issue de l'étape 35, le procédé de détermination se poursuit avec l'étape 38. Autrement dit, dans une telle variante, une station de recharge ne peut pas successivement basculer en état inactif au cours de l'étape 35, puis basculer en état actif au cours de l'étape 37, pendant un même pas de temps.

En variante, le procédé de détermination 30' et le procédé de commande 10 intègrent une analyse des spécificités liées aux utilisateurs des véhicules électriques Vi. Pour cela, un identifiant est attribué à chaque utilisateur, cet identifiant faisant partie de la première variable d'état $x_t^k$. Ainsi, il est possible de tenir compte du fait qu'un utilisateur déconnecte systématiquement son véhicule électrique Vi de la station de recharge Si associée en respectant le temps de fin de charge annoncé, ou au contraire réalise fréquemment des déconnexions anticipées. Ces comportements sont alors pris en compte dans l'établissement des échantillons k de la collection K avec le procédé de détermination 30', et notamment dans le calcul de la deuxième valeur. La consigne de fonctionnement établie à l'étape 40 du procédé de commande 10 est ainsi plus fiable et plus précise, améliorant la satisfaction utilisateur.

Dans l'exemple, le modèle de programmation stochastique cherche à maintenir la quantité d'énergie électrique totale délivrée par le système d'alimentation P à la pluralité de stations de recharge S1 - Sn inférieure au seuil d'énergie maximale prédéterminé $\overline{c1}$, et cherche également à minimiser le coût de l'énergie électrique délivrée par le système d'alimentation P à la pluralité de stations de recharge S1 - Sn, en tenant compte d'un seuil d'augmentation tarifaire prédéterminé $\overline{c2}$, les seuils $\overline{c1}$ et $\overline{c2}$ étant distincts, le seuil $\overline{c2}$ étant inférieur au seuil $\overline{c1}$.

En variante, le modèle de programmation stochastique cherche à maintenir la quantité d'énergie électrique totale délivrée par le système d'alimentation P à la pluralité de stations de recharge S1 - Sn inférieure au seuil d'énergie maximale prédéterminé $\overline{c1}$, sans chercher à minimiser le coût de l'énergie électrique délivrée par le système d'alimentation P à la pluralité de stations de recharge S1 - Sn. Le seul autre objectif du modèle de programmation stochastique est alors de maximiser la satisfaction des utilisateurs des véhicules électriques Vi rechargés par le système de stations de recharge I.

En variante, le coût total de l'énergie électrique délivrée par le système d'alimentation P à la pluralité de stations de recharge S1 - Sn pendant un pas de temps donné n'est pas obtenu par l'équation décrite ci-dessus permettant d'obtenir la variable de coût total L, mais par un autre mode de calcul. Par exemple, ce calcul intègre un prix de l'électricité variable, dépendant notamment de la puissance électrique consommée par le système de stations de recharge I. Selon un autre exemple, la pénalité ξ payée en cas de dépassement du seuil $\overline{c2}$ ne correspond pas à un montant fixe, mais à un montant proportionnel à la quantité d'énergie électrique dépassant le seuil $\overline{c2}$ ou à la quantité d'énergie électrique consommée par le système de stations de recharge I.

En variante de l'invention, le procédé de commande 10 et le procédé de détermination 30' sont mis en oeuvre par deux dispositifs de calcul distincts. Par exemple, le procédé de commande 10 est mis en oeuvre par le dispositif de calcul C alors que le procédé de détermination 30' est mis en oeuvre par un dispositif de calcul distinct du système de stations de recharge I.

Toute caractéristique décrite pour un mode de réalisation ou une variante dans ce qui précède peut être mise en oeuvre pour les autres modes de réalisation et variantes décrits précédemment, pour autant que techniquement faisable.

**Revendications**

1. Procédé (30') de détermination d'un scénario prévisionnel de fonctionnement d'un système de stations de recharge (I) pour véhicules électriques au cours d'un intervalle de temps prédéterminé comprenant plusieurs pas de temps,

    le système de stations de recharge (I) comprenant :

        - un système d'alimentation (P), et
        - une pluralité de stations de recharge (S1 - Sn), chaque station de recharge (Si) étant configurée pour être alimentée en énergie électrique par le système d'alimentation (P) et pour délivrer une énergie électrique à un véhicule électrique (Vi), chaque station de recharge (Si) étant soit en état inactif, lorsqu'elle n'est pas capable de recharger un véhicule électrique (Vi), soit en état actif, lorsqu'elle est capable de recharger un véhicule électrique (Vi),

    le procédé comprenant, pour chaque station de recharge (Si) et pour chaque pas de temps de l'intervalle de temps prédéterminé, maintenir la station de recharge (Si) dans son état ou changer l'état de la station de recharge, avec une probabilité de changer l'état de la station de recharge calculée sur la base de :

        - l'heure et la date correspondant au pas de temps actif,
        - une durée de session, exprimée en nombre de pas de temps, séparant le pas de temps actif du dernier pas de temps passé au cours duquel la station de recharge (Si) a changé d'état, et
        - si la station de recharge est en état actif, une durée restante, exprimée en nombre de pas de temps, séparant le pas de temps actif d'un pas de temps futur correspondant à une heure et une date de fin de recharge du véhicule électrique (Vi), l'heure et la date de fin de recharge du véhicule électrique étant déterminés pendant un pas de temps passé au cours duquel la station de recharge (Si) a basculée en état actif,

le procédé comprenant en outre une étape (39) de détermination d'une représentation numérique d'un scénario prévisionnel de fonctionnement du système de stations de recharge (I) comprenant, pour chaque pas de temps, l'état de chaque station de recharge.

2. Procédé (30') selon la revendication 1, comprenant, pour chaque station de recharge (Si) et pour chaque pas de temps de l'intervalle de temps prédéterminé, les étapes suivantes :

a) déterminer (32) l'état de la station de recharge (Si),
b) si la station de recharge (Si) est en état inactif au début du pas de temps, alors :

- maintenir la station de recharge (Si) est en état inactif, ou
- basculer (37) la station de recharge (Si) en état actif et calculer une requête initiale de charge, exprimée en quantité d'énergie électrique, avec une probabilité de basculer la station de recharge (Si) en état actif égale à une première valeur, la première valeur est calculée sur la base de :

∘ l'heure et la date correspondant au pas de temps actif, et
∘ une durée de session, exprimée en nombre de pas de temps, séparant le pas de temps actif du pas de temps passé au cours duquel la station de recharge (Si) a basculée en état inactif,

c) si la station de recharge (Si) est en état actif au début du pas de temps, alors :

- maintenir la station de recharge (Si) est en état actif, ou
- basculer (35) la station de recharge (Si) en état inactif, avec une probabilité de basculer la station de recharge (Si) en état inactif égale à une deuxième valeur, la deuxième valeur est calculée sur la base de :

∘ l'heure et la date correspondant au pas de temps actif,
∘ une durée de session, exprimée en nombre de pas de temps, séparant le pas de temps actif du pas de temps passé au cours duquel la station de recharge (Si) a basculée en état actif, et
∘ une durée restante, exprimée en nombre de pas de temps, séparant le pas de temps actif d'un pas de temps futur correspondant à une heure et une date de fin de recharge du véhicule électrique (Vi), l'heure et la date de fin de recharge du véhicule électrique étant déterminés pendant un pas de temps passé au cours duquel la station de recharge (Si) a basculée en état actif,

la représentation numérique du scénario prévisionnel comprenant en outre, pour chaque pas de temps et lorsqu'une station de recharge est en état actif, la requête initiale de charge associée à la station de recharge.

3. Procédé (30') selon la revendication 2, dans lequel, pendant l'étape c) :

- si la station de recharge (Si) est en état actif depuis le début du pas de temps initial de l'intervalle de temps prédéterminé, alors la probabilité de basculer la station de recharge en état inactif est égale à la deuxième valeur, et
- si la station de recharge (Si) n'est pas en état actif depuis le début du pas de temps initial de l'intervalle de temps prédéterminé, alors la probabilité de basculer la station de recharge en état inactif est égale à une troisième valeur, la troisième valeur étant calculée sur la base de :

∘ l'heure et la date correspondant au pas de temps actif, et
∘ une durée de session, exprimée en nombre de pas de temps, séparant le pas de temps actif du pas de temps passé au cours duquel la station de recharge (Si) a basculée en état actif.

4. Procédé (30') selon l'une des revendications 2 ou 3, dans lequel l'étape c) comprend en outre, après le basculement (35) de la station de recharge (Si) en état inactif :

- basculer (37) de la station de recharge (Si) en état actif et calculer une requête initiale de charge, exprimée en quantité d'énergie électrique, avec une probabilité de basculer la station de recharge en état actif égale à la première valeur.

**5.** Procédé (30') selon l'une des revendications 2 à 4, dans lequel déterminer (32) l'état de la station de recharge (Si) au cours de l'étape a) comprend :

- pour le premier pas de temps de l'intervalle de temps prédéterminé, obtenir l'état de la station de recharge (Si) à partir de données fournies préalablement à la mise en oeuvre du procédé (30'), et
- pour chaque pas de temps de l'intervalle de temps prédéterminé différent du premier pas de temps, obtenir l'état de la station de recharge (Si) à l'issue du pas de temps précédent.

**6.** Procédé (30') selon l'une des revendications 2 à 5, dans lequel, au cours de l'étape b), calculer la requête initiale de charge s'effectue sur la base de :

- l'heure et la date correspondant au pas de temps actif, et
- une durée de session, exprimée en nombre de pas de temps, séparant le pas de temps actif du pas de temps passé au cours duquel la station de recharge (Si) a basculée en état inactif.

**7.** Procédé (30') selon l'une des revendications 2 à 6, dans lequel l'étape c) comprend :

- vérifier (33) si la durée restante séparant le pas de temps actif du pas de temps futur correspondant à une heure et une date annoncées de fin de recharge du véhicule électrique (Vi) est égale à zéro pas de temps,
- si la durée restante est égale à zéro pas de temps, basculer (34) la station de recharge (Si) en état inactif, et
- si la durée restante est supérieure à zéro pas de temps, maintenir la station de recharge (Si) est en état actif ou basculer (35) la station de recharge (Si) en état inactif avec une probabilité de basculer la station de recharge (Si) en état inactif égale à la deuxième valeur.

**8.** Procédé (30') selon l'une des revendications 2 à 7, dans lequel la première valeur, la deuxième valeur et, le cas échéant, la troisième valeur, sont respectivement obtenues à l'aide d'un algorithme d'apprentissage automatique de classification à renforcement de gradient.

**9.** Procédé (10) de commande d'un système de stations de recharge (I) pour véhicules électriques (Vi), le système de stations de recharge (I) comprenant :

- un système d'alimentation (P),
- une pluralité de stations de recharge (S1 - Sn), chaque station de recharge (Si) de la pluralité de stations de recharge (S1 - Sn) étant alimentée en énergie électrique par le système d'alimentation (P) et étant configurée pour délivrer une énergie électrique à un véhicule électrique (Vi), chaque station de recharge (Si) étant soit en état inactif, lorsqu'elle n'est pas capable de recharger un véhicule électrique (Vi), soit en état actif, lorsqu'elle est capable de recharger un véhicule électrique (Vi), et
- un dispositif de calcul (C), configuré pour commander la quantité d'énergie électrique délivrée à chaque station de recharge (Si) par le système d'alimentation (P),

le procédé (10) étant mis en oeuvre par le dispositif de calcul (C) et comprenant les étapes suivantes :

a) déterminer (20) l'heure et la date de l'instant présent,
b) pour chaque station de recharge (Si) de la pluralité de station de recharge (S1 - Sn) déterminer (20) si la station de recharge (Si) est en état inactif ou en état actif à l'instant présent, et déterminer une requête initiale de charge associée à chaque station de recharge (Si) en état actif,
c) générer (30) une pluralité de scénarios prévisionnels de fonctionnement du système de stations de recharge (I) en mettant en oeuvre plusieurs fois le procédé de détermination d'un scénario prévisionnel (30') selon l'une quelconque des revendications 1 à 8,
d) établir (40) une consigne de fonctionnement du système de stations de recharge (I), sur la base :

- de l'état de chaque station de recharge (Si) déterminé à l'étape b),
- de la requête initiale de charge associée à chaque station de recharge en état actif déterminée à l'étape b), et
- de la pluralité de scénarios prévisionnels de fonctionnement du système de stations de recharge (I) générés à l'étape c),

la consigne de fonctionnement du système de stations de recharge (I) établie attribuant une quantité d'énergie électrique à délivrer par le système d'alimentation (P) à chaque station de recharge (Si), et
e) commander (50), par le dispositif de calcul (C), le système d'alimentation (P) pour délivrer la quantité d'énergie électrique attribuée à chaque station de recharge (Si) par la consigne de fonctionnement.

**10.** Procédé (10) selon la revendication 9, dans lequel, au cours de l'étape d), l'établissement (40) de la consigne de fonctionnement du système de stations de recharge (I), s'effectue à l'aide d'un modèle de programmation stochastique à deux étapes dans lequel la consigne de fonctionnement du système de stations de recharge (I) représente une variable de décision et dans lequel la pluralité de scénarios prévisionnels de fonctionnement du système de stations de recharge (I), générée en mettant en oeuvre plusieurs fois le procédé de détermination d'un scénario prévisionnel (30') au cours de l'étape c), représente une distribution de probabilité.

**11.** Procédé (10) selon la revendication 10, dans lequel le modèle de programmation stochastique à deux étapes cherche à :

- maintenir une quantité d'énergie électrique totale délivrée par le système d'alimentation (P) à la pluralité de stations de recharge (S1 - Sn) inférieure à un seuil d'énergie maximale prédéterminé, et
- maximiser un pourcentage de charge de chaque véhicule électrique (Vi) rechargé par une station de charge (Si) en état actif, le pourcentage de charge $x_t^i$ de chaque véhicule électrique (Vi) étant obtenu par l'équation suivante :

$$x^i = 1 - \frac{r^i}{k^i}$$

dans laquelle :

- $k^i$ correspond à la requête initiale de charge associée à la station de charge (Si),
- $r^i$ correspond à la quantité d'énergie électrique restante à délivrer au véhicule électrique (Vi) associé à la station de charge (Si) pour atteindre la requête initiale de charge.

**12.** Procédé (10) selon l'une des revendications 9 à 11, dans lequel, au cours de l'étape d), la consigne de fonctionnement du système de stations de recharge (I) est également établie (40) sur la base de l'écart entre une consigne de fonctionnement déterminée par une exécution précédente du procédé de commande et la quantité d'énergie électrique effectivement délivrée à chaque station de recharge (Si) depuis ladite exécution précédente du procédé de commande.

**13.** Procédé (10) selon l'une des revendications 9 à 12, dans lequel les étapes a) à e) sont mises en oeuvre de manière périodique, en étant répétées après une durée égale à la durée d'un pas de temps de l'intervalle de temps prédéterminé.

**14.** Système de stations de recharge (I) pour véhicules électriques (Vi) comprenant :

- un système d'alimentation (P),
- une pluralité de stations de recharge (S1 - Sn), chaque station de recharge (Si) de la pluralité de stations de recharge (S1 - Sn) étant alimentée en énergie électrique par le système d'alimentation (P) et étant configurée pour délivrer une énergie électrique à un véhicule électrique (Vi), et
- un dispositif de calcul (C), configuré pour commander la quantité d'énergie électrique délivrée à chaque station de recharge (Si) par le système d'alimentation (P),

dans lequel le dispositif de calcul (C) est configuré pour mettre en oeuvre le procédé de commande de l'une quelconque des revendications 9 à 13.

FIG. 1

FIG. 2

30'

```
        ┌──────┐                    ┌──────┐
        │  31  │                    │  39  │
        └──┬───┘                    └──▲───┘
           │                           │
           ▼                        ┌──┴───┐
    ┌─────◇─────┐◄─────────────────│  38  │
    │    32     │                   └──▲───┘
    └─────┬─────┘                      │
          │                            │
          ▼                            │
  ┌────┐◄─◇─────┐                      │
  │ 34 │  │ 33  │                      │
  └─┬──┘  └──┬──┘                      │
    │        │                         │
    │        ▼                         │
    │    ┌──────┐                      │
    │    │  35  │                      │
    │    └──┬───┘                      │
    │       │                          │
    │       ▼                          │
    │     ◇─────┐──────────────────────┤
    │     │ 36  │                       │
    │     └──┬──┘                       │
    │        │                          │
    │        ▼                          │
    │    ┌──────┐                       │
    └───►│  37  │◄──────────────────────┘
         └──────┘
```

## FIG. 3

Europäisches
Patentamt

European
Patent Office

Office européen
des brevets

## RAPPORT DE RECHERCHE EUROPEENNE

Numéro de la demande

EP 25 15 6502

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SOKORAI PETER ET AL: "Stochastic Modeling of the Charging Behavior of Electromobility", WORLD ELECTRIC VEHICLE JOURNAL, vol. 9, no. 44, 22 octobre 2018 (2018-10-22), pages 1-14, XP093197505, DOI: 10.3390/wevj9030044 | 1-8 | INV. B60L53/63 B60L53/67 G06Q10/04 G06Q50/06 H02J3/00 |
| Y | * le document en entier * | 9-14 | |
| Y | US 2021/276447 A1 (KUMAR ARUN [US] ET AL) 9 septembre 2021 (2021-09-09) | 9-14 | |
| A | * alinéa [0004] - alinéa [0012]; revendications 18-34 * * alinéa [0031] - alinéa [0095]; figures 1-5 * * alinéa [0096] - alinéa [0140]; figure 7 * | 1-8 | |
| A | ZHAN KAIQIAO ET AL: "A probability transition matrix based decentralized electric vehicle charging method for load valley filling", ELECTRIC POWER SYSTEMS RESEARCH, ELSEVIER, AMSTERDAM, NL, vol. 125, 8 avril 2015 (2015-04-08), pages 1-7, XP029244256, ISSN: 0378-7796, DOI: 10.1016/J.EPSR.2015.03.013 * abrégé * | 1-14 | DOMAINES TECHNIQUES RECHERCHES (IPC) B60L G06Q H02J |

-/--

Le présent rapport a été établi pour toutes les revendications

| Lieu de la recherche | Date d'achèvement de la recherche | Examinateur |
|---|---|---|
| La Haye | 30 juin 2025 | Utz, Tilman |

page 1 de 2

Europäisches
Patentamt

European
Patent Office

Office européen
des brevets

**RAPPORT DE RECHERCHE EUROPEENNE**

Numéro de la demande

EP 25 15 6502

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | VERMEULEN IGNA ET AL: "Simulation of Future Electric Vehicle Charging Behavior-Effects of Transition from PHEV to FEV", WORLD ELECTRIC VEHICLE JOURNAL, vol. 10, no. 42, 14 juin 2019 (2019-06-14) , pages 1-14, XP093197499, DOI: 10.3390/wevj10020042 * abrégé * ----- | 1-8 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 30 juin 2025 | Utz, Tilman |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 15 6502

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-06-2025

| Document brevet cité au rapport de recherche | Date de publication | Membre(s) de la famille de brevet(s) | Date de publication |
|---|---|---|---|
| US 2021276447 A1 | 09-09-2021 | US 2021276447 A1 | 09-09-2021 |
| | | WO 2019126806 A1 | 27-06-2019 |

EPO FORM P0460